(19) Europäisches Patentamt
European Patent Office
Office européen des brevets

(11) **EP 2 067 834 A1**

(12) **EUROPÄISCHE PATENTANMELDUNG**

(43) Veröffentlichungstag:
**10.06.2009   Patentblatt 2009/24**

(51) Int Cl.:
*C09J 7/00* (2006.01)        *C08G 18/62* (2006.01)
*C08G 18/08* (2006.01)

(21) Anmeldenummer: **09156170.4**

(22) Anmeldetag: **09.09.2005**

(84) Benannte Vertragsstaaten:
**DE ES FR GB IT**

(30) Priorität: **09.09.2004   DE 102004044086**

(62) Dokumentnummer(n) der früheren Anmeldung(en)
nach Art. 76 EPÜ:
**05782571.3 / 1 791 921**

(71) Anmelder: **tesa SE**
**20253 Hamburg (DE)**

(72) Erfinder:
• **Zöllner, Stephan Dr.**
  **21244, Buchholz /Nordheide (DE)**
• **Hansen, Sven**
  **22765, Hamburg (DE)**
• **Brandes, Kay**
  **21259, Otter (DE)**
• **Speer, Jörg**
  **24616, Brokstedt (DE)**

Bemerkungen:
Diese Anmeldung ist am 25-03-2009 als
Teilanmeldung zu der unter INID-Code 62 erwähnten
Anmeldung eingereicht worden.

(54) **Trägerloses, homogen vernetztes Selbstklebeband, insbesondere Transferklebeband**

(57)   Die Erfindung beschreibt ein beidseitig klebendes, trägerloses Selbstklebeband, was insbesondere zur Erzielung von sehr dauerhaften Verklebung von diversen Gegenständen eingesetzt werden kann. Dieses beidseitig klebende, trägerlose Selbstklebeband besteht aus einer homogen vernetzten einschichtig aufgebauten Acrylatschmelzhaftklebermasse, die mit Trennmaterialien wie silikonisierten Trennpapieren oder Trennfolien abgedeckt sein kann. Das beidseitig klebende, trägerlose Haftklebeband ist dadurch charakterisiert, dass es aus einem photoinitiatorfreien, thermisch homogen vernetzten Acrylathotmelt besteht welches vorwiegend über Urethaneinheiten vernetzt ist. Es zeichnet sich insbesondere dadurch aus, dass es homogen durch die Schicht hindurch chemisch vernetzt ist und im Gegensatz zu strahlenchemisch (UV/ESH) vernetzten Acrylatschichten kein Vernetzungsprofil durch die Schicht hindurch aufweist. Es kann insbesondere als Transferklebeband zur permanenten Befestigung von Gegenständen auf diversen Substraten eingesetzt werden.

EP 2 067 834 A1

**Beschreibung**

Die Erfindung betrifft ein beidseitig klebendes, trägerloses Selbstklebeband, welches insbesondere zur Erzielung von sehr dauerhaften Verklebungen eingesetzt werden kann. Die Erfindung betrifft weiterhin ein Verfahren zur Herstellung eines derartigen Klebebandes. Das Serlbstklebeband kann insbesondere als Transferklebeband eingesetzt wird.

Für industrielle Haftklebeband-Anwendungen werden sehr häufig doppelseitig klebende Haftklebebänder eingesetzt, um zwei Materialen miteinander zu verbinden. Man unterscheidet hierbei je nach Typ einschichtige doppelseitig klebende Selbstklebebänder und mehrschichtige doppelseitig klebende Selbstklebebänder.

Einschichtige doppelseitig klebende Selbstklebebänder, sogenannte Transfertapes, sind so aufgebaut, dass die Haftklebeschicht zwar ggf. Fasern oder Füllstoffe, aber keinen Träger enthält und nur mit entsprechenden Trennmaterialien, z-B- silikonisierten Trennpapieren oder Trennfolien abgedeckt ist. Der Begriff Transferklebeband ist abgeleitet vom Transfer der Haftklebeeigenschaft auf ein anderes Material (Profile, Schäume etc.). Transfertapes können einseitig oder beidseitig mit Trennmaterialen abgedeckt sein. Oft werden beidseitig unterschiedlich stark silikonisierte Trennpapiere oder -folien verwendet, damit das Transfertape problemlos zur Rolle gewickelt werden und anschließend problemlos appliziert werden kann. Derartige Transferklebebänder werden häufig verwendet, um die unterschiedlichsten Substrate haftklebrig auszurüsten. Dies geschieht z.B. durch Aufkaschieren des Transfertapes auf das Substrat. Das Trennpapier verbleibt dann als Abdeckung der Haftklebeschicht im Produkt.

Transfertapes werden häufig aus der Lösung hergestellt. Diese Tapes sind in der Regel relativ dünn, da bei höheren Masseaufträgen die Schichten blasig werden können. Es ist bekannt, dass konventionelle Beschichtungsmethoden zur Herstellung von Haftklebeschichten mit einer Dicke von mehr als 100 $\mu$m, insbesondere aber oberhalb 200 $\mu$m, problematisch sind. So bilden sich bei der Trocknung von lösemittelhaltigen oder wasserbasierten, dicken Haftklebeschichten Lösemittelblasen, wodurch die optischen und klebtechnischen Eigenschaften der getrockneten Haftklebeschicht nachteilig beeinträchtigt werden. Deshalb muss mit Erhöhung der aufzutragenden Haftklebstoffmenge die Beschichtungsgeschwindigkeit reduziert werden, was derartig hergestellte Produkte unrentabel macht.

Insbesondere zur Herstellung dickerer Transfertapes sind lösemittelfreie Verfahren von Vorteil. Dabei entwickelt sich der technologische Prozess zur Herstellung und Beschichtung von Haftklebemassen immer weiter. In der Industrie sind Heißschmelzverfahren (Hotmeltverfahren) mit lösungsmittelfreier Beschichtungstechnik zur Herstellung von Haftklebemassen von anwachsender Bedeutung. Diese Entwicklung wird durch immer strengere Umweltauflagen und steigende Preise für Lösemittel weiter forciert. Daher ist es ein Ziel der Entwicklung, Lösungsmittel so weit wie möglich aus dem Fertigungsprozess für Haftklebebänder zu eliminieren. Zudem vermeidet man hierdurch das Problem der Entstehung von Blasen und anderer Unregelmäßigkeiten in den Beschichtungen. Besonders vorteilhaft an der Hotmelt-Technologie ist die Möglichkeit, mit sehr hohen Beschichtungsgeschwindigkeiten zu beschichten.

Grundsätzlich kann als Haftklebemasse eines Transfertapes jedes Material Verwendung finden, das haftklebrig ist. Oft finden Massen auf Basis von Naturkautschuk, Synthesekautschuk, Polyurethan oder Polyacrylat Verwendung. So sind hinsichtlich der Hotmelttechnologie Massen auf Basis von Styrolblockcopolymeren beliebt, da sie schnell und effizent beschichtbar sind. Beschichtungen auf Basis von Styrolblockcopolymeren weisen kein Vernetzungsprofil durch die Schicht hindurch auf. Nachteilig an Haftklebemassenbeschichtungen auf Basis von Styrolblockcopolymeren, wie SIS, SBS, SEBS oder SEPS ist ihre geringe UV- und Alterungsbeständigkeit. Besonders nachteilig an Transfertapes auf der Basis von Styrolblockcopolymeren ist ihre sehr geringe Wärmebeständigkeit. Oberhalb von etwa 70 - 90°C, je nach Formulierung, erweichen die Massen, und die Verklebungen versagen. Die derzeitig neu entwickelten Massen auf Basis von Acrylatblockcopolymeren sind deutlich alterungsbeständiger. Zudem sind wasserklare transparente haftklebrige Beschichtungen mit ihnen möglich. Da sie über Styrol- oder Methylmethacrylatdomänen nur physikalisch vernetzt sind, erweichen jedoch auch diese Systeme, sobald die Anwendungstemperatur oberhalb der Erweichungstemperatur der Domäne liegt. Beide Systeme sind für Anwendungen bei höheren Temperaturen nicht geeignet.

Für hochwertige industrielle Anwendungen werden vernetzte Polyacrylate bevorzugt, da diese wasserklar transparent und witterungsstabil sind. Zudem sind Polyacrylate aufgrund ihres gesättigten Polymergerüstes sehr alterungsbeständig, unempfindlich gegenüber Veränderung durch Bestrahlung mit UV- oder Sonnenlicht, stabil gegenüber Ozonolyse und je nach Comonomerzusammensetzung inhärent haftklebrig. Ein Abmischen mit migrierfähigen Bestandteilen wie Harzen und Weichmachern ist oft nicht nötig. Vernetzte Polyacrylate sind sehr beständig gegenüber Scherbelastung auch bei hohen Temperaturen.

Nach dem Stand der Technik werden lösemittelfreie acrylatbasierte Transfertapes häufig über strahlenchemische Verfahren hergestellt. So können Transfertapes beispielsweise durch UV-Präpolymerisation oder UV-Vernetzung von Schmelzhaftklebern hergestellt werden. Alle diese Produkte weisen einen Vernetzungsgradienten durch die Schicht hindurch auf.

Die DE 43 03 183 A1 beschreibt ein Verfahren zur Herstellung von dicken Haftklebeschichten, insbesondere zur Herstellung von selbstklebenden Hochleistungs-klebstoffartikeln. Hierbei wird ein mittels UV-Strahlen zu polymerisierendes Gemisch von Ausgangsmonomeren mit einem lösemittelfreien, gesättigten photopolymerisationsfähigen Polymerisat vermischt und dabei verdickt. Dann wird dieses Gemisch auf einen dehäsiv ausgerüsteten Träger aufgebracht und mit UV-Strahlen bestrahlt. Nachteilig ist die Verwendung von einpolymerisierten oder zugesetzten Photoinitiatoren, da die Schichten vergilben können und bei UV-Exposition vor der Verwendung deutliche Veränderungen der klebtechnischen Eigenschaften erleiden können. Dann muss - beispielsweise durch UV-undurchlässige Verpackungen - erheblicher Aufwand betrieben werden, damit der Kunde eine gleichmäßig hohe Verklebungsleistung bekommt. Zudem besteht die Gefahr bei Verklebung auf UVtransparenten Untergründen, z.B. auf Fensterglas oder transparenten Kunststoffoberflächen, dass photoinitiatorhaltige Schichten nachvernetzen. Damit steigt zwar zunächst die Verklebungsfestigkeit an, aber dann verlacken und verspröden durch weitere Vernetzung die Schichten. Dies führt über kurz oder lang zum Versagen der Verklebung insbesondere unter Scherbelastung.

Nachteilig bei allen strahlenchemisch vernetzten, insbesondere bei UV-vernetzten Schichten ist ein mehr oder weniger stark ausgeprägtes Vernetzungsprofil durch die Schicht hindurch. Zur Bestrahlungsquelle hin ist die UV-vernetzte Schicht immer stärker vernetzt als auf der der UV-Strahlungsquelle gegenüber liegenden Seite. Der Grad des Vernetzungsprofils ist z.B. abhängig von der Schichtdicke, der Wellenlänge des verwendeten Photoinitiators und auch der Wellenlänge der emittierten Strahlung der UV-Strahlungsquelle.

In DE 198 46 902 A1 und DE 101 63 545 A1 wird vorgeschlagen, durch beidseitige ESH-(Elektronenstrahl-) bzw. UV-Bestrahlung das resultierende Vernetzungsprofil zu verringern und besonders dicke UV-vernetzbare Acrylathaftklebeschichten nahezu homogen zu vernetzen. Allerdings weisen auch diese so hergestellten Schichten ein Vernetzungsprofil auf; zudem ist dieses Verfahren sehr aufwendig.

ESH-vernetzte Schichten weisen je nach Schichtdicke und Material immer ein Vernetzungsprofil auf. Auch bei ihnen ist die exakte Vernetzungseinstellung nicht möglich. Immerhin verläuft die ESH-Vernetzung ohne zugesetzte Photoinitiatoren, so dass einige - aber nicht alle - Nachteile, verglichen mit den UV-bestrahlten Schichten, abgestellt sind. Abhängig von der Beschleunigerspannung und der Dichte des zu durchstrahlenden Materials lässt sich die Dicke der durchstrahlten Schicht variieren. Schichtdicken oberhalb von etwa 500 $\mu$m, insbesondere wenn sie mit anorganischen Füllstoffen wie beispielsweise Glaskugeln gefüllt sind, lassen sich jedoch nicht mehr wirtschaftlich durchstrahlen, so dass die Schichtdicke der Haftklebeschichten von Haftklebebändern nach oben begrenzt ist.

Seit einiger Zeit sind UV-vernetzbare Schmelzhaftkleber kommerziell unter dem Handelsnamen acResin® erhältlich. Diese Massen lassen sich aufgrund ihres relativ niedrigen gewichtsmittleren Molekulargewichts ($M_w$ ca. 200.000 - 300.000 g/mol) sehr gut beschichten und anschließend durch UV-Bestrahlung vernetzen. Nachteilig sind allerdings wiederum die Inhomogenität der Vernetzung durch ein Dosisprofil, weiterhin eine geringe Effizienz bei harzmodifizierten Acrylatmassen und die Schichtdickenbegrenzung auf deutlich unter 100 $\mu$m, die einen Einsatz für wesentliche Bereiche industrieller Klebebänder ausschließen.

Nach dem Stand der Technik werden Transfertapes auch durch einen Prozess der zweistufigen UV-Polymerisation hergestellt, der aber entscheidende Nachteile aufweist. Bei diesem Prozess wird im ersten Schritt ein Gemisch auf Basis von Acrylatmonomeren in Gegenwart einen Photoinitiators durch UV-Bestrahlung in einem Reaktor zu etwa 10 - 20 % Umsatz vorpolymerisiert. Alternativ kann dieser "Acrylic-Syrup" auch durch thermisch initiierte freie radikalische Polymerisation gewonnen werden. Im zweiten Schritt wird dieser Acrylic-Syrup, nachdem ggf. noch weitere Photoinitiatoren, Füllstoffe, Glashohlkugeln und Vernetzer zugesetzt wurden, zwischen antiadhäsiv beschichteten UV-durchlässigen Folien beschichtet und mittels erneuter UV-Bestrahlung auf der Bahn zu höherem Umsatz polymerisiert und dabei gleichzeitig vernetzt.

Insbesondere die Herstellung "dickerer" viskoelastischer Schichten muss in vielen Fällen unter Sauerstoffausschluss durchgeführt werden. Die Masse wird dann durch Abdeckung mit Folienmaterial geschützt und eine UV-Initiierung durch die Folien hindurch bewirkt. PE- und PP-Folien, die für diesen Zweck z.T. eingesetzt werden, verformen sich unter den Vernetzungs-Reaktionsbedingungen (bei der UV-iniitierten Polymerisation wird Reaktionswärme frei, die nicht-temperaturbeständige Folie verformen kann) und sind daher schlecht geeignet. UV-durchlässige Folien wie PET sind wärmebeständiger; allerdings muss hier ein langwellig reagierender Photoinitiatoir in die Masse gegeben werden, damit die Reaktion stattfindet. Daher neigen diese Schichten zur Nachvernetzung unter UV- oder Sonnenlicht. Dadurch geht der materialspezifische Vorteil des Polyacrylat durch dieses Verfahren verloren. Nachteilig ist zudem, dass UV-untransparente Füllstoffe nicht verwendet werden können. Auch bleibt verfahrensbedingt ein hoher Restmonomeranteil in diesen Produkten. Eine mögliche Restmonomerreduzierung durch Reduktion der Beschichtungsgeschwindigkeit oder durch intensive Nachtrocknung ist wenig wirtschaftlich. Die maximal erreichbare Schichtdicke ist sehr stark abhängig von der Wellenlänge des verwendeten Photoinitators. Herstellbar sich Schichten bis etwas 1 mm, allerdings mit den oben genannten Nachteilen. Noch dickere Schichten lassen sich praktisch nicht mehr gewinnen.

Auch Transfertapes, die durch zweistufige UV-Polymerisation hergestellt wurden, weisen ein Vernetzungsprofil durch die Schicht hindurch auf.

Nachteilig an Transfertapes, die ein Vernetzungsprofil durch die Schicht hindurch aufweisen, ist ihre ungenügende Fähigkeit, Spannungen gleichmäßig zu verteilen. Eine Seite ist immer entweder über- oder untervernetzt. Eine exakte Balance zwischen adhäsiven und kohäsiven Eigenschaften ist nie für die gesamte Schicht, sondern nur für einen kleinen Ausschnitt einstellbar.

Aufgabe der Erfindung ist daher die Nachteile des Standes der Technik zu überwinden und Transfertapes anzubieten, welche kein Vernetzungsprofil durch die Schicht hindurch aufweisen.

Gelöst wird die Aufgabe durch ein homogen - insbesondere thermisch - vernetztes Selbstklebeband ohne Permanentträger, welches mindestens eine Schicht eines photoinitiatorfreien vernetzten Acrylatschmelzhaftkleber aufweist. Sehr vorteilhaft ist die Acrylatschmelzhaftkleber-Schicht mindestens auf einen temporären Träger, insbesondere ein Trennmaterial, beschichtet. Unter "homogener Vernetzung" ist zu verstehen, dass die Acrylatschmelzhaftkler-Schicht kein Vernetzungsprofil durch die Schicht hindurch aufweist. Die thermische Vernetzung ist hervorragend geeignet, einen homogenen Vernetzungsverlauf durch die Schicht hindurch zu ermöglichen.

Als temporäre Träger (bzw. temporäres Trägermaterial) werden solche Träger (bzw. -materialien) bezeichnet, die zwar für den Herstellungs-, Transport- und/oder Lagerprozess vorhanden sind, für den eigentlichen Verklebeprozess der zu verklebenden Substrate aber wieder entfernt werden.

Im Gegensatz dazu sind permanente Träger solche Träger, die als Bestandteil des Selbstklebebandes fest in dieses eingebaut sind und auch im Verklebungszustand als Bestandteil des Klebebandes erhalten bleiben.

In einer bevorzugten Ausführungsform der Erfindung wird das Selbstklebeband durch die Acrylatschmelzhaftkleber-Schicht gebildet (Ein-Schichten-Aufbau).

Das Selbstklebeband mit der zumindest einen homogen vernetzten Schmelzhaftklebeschicht unterliegt verfahrensbedingt im Gegensatz zu UV- und ESH vernetzten Systemen prinzipiell keiner Schichtdickenbegrenzung. Vorteilhafte Ausführungsformen des erfindungsgemäßen Selbstklebebandes weisen Schichtdicken des Acrylat-Schmelzhaftklebers von 50 bis 5000 $\mu$m, insbesondere 100 bis 2000 $\mu$m auf. Es sind erfindungsgemäß auch hiervon abweichende Dicken möglich; insbesondere kann das erfindungsgemäße Selbstklebeband auch besonders dick sein.

Das erfindungsgemäße Selbstklebeband kann ungefüllt, harzmodifiziert, gefüllt oder geschäumt sein.

Zur Schäumung ist es vorteilhaft, wenn der Acrylatschmelzhaftklebemasse beispielsweise Glasvollkugeln, Glashohlkugeln oder expandierende Mikroballons zugesetzt sind.

Bei verschiedenen vorteilhaften Ausgestaltungen des Selbstklebebandes können die Merkmale der einzeln genannten Ausführungsformen der Erfindung auch miteinander kombiniert werden.

In einer weiteren bevorzugten Ausführungsform wird die Vernetzung mittels Vernetzungsstellen bewirkt, die vorwiegend über Urethaneinheiten gebildet wird. Diese resultieren insbesondere aus einer Vernetzungsreaktion von Isocyanaten mit primären Hydroxyeinheiten und ergeben sich aus einer bevorzugten Vorgehensweise, die die thermische Vernetzung von Haftklebemassen vorteilhaft ermöglicht.

Vorteilhaft wird das Selbstklebeband dadurch erhalten, dass einem Polyacrylatcopolymer (im folgenden einfach als "Polyacrylat" bezeichnet) auf Basis von Acrylsäureestern und/oder Methacrylsäureestern in der Schmelze zumindest ein thermischer Vernetzer zugesetzt wird, wobei das mit dem Vernetzer versehene Polyacrylat zu einer Beschichtungseinheit gefördert wird, dort auf ein temporäres Trägermaterial beschichtet wird. Bevorzugt findet die Vernetzung des Polyacrylats auf dem Träger statt. Erfindungsgemäß bevorzugt enthält ein Teil der Acrylsäureester und/oder Methacrylsäureester primäre Hydroxygruppen. Weiter erfindungsgemäß bevorzugt wird der thermische Vernetzer in einem Extruder vor der Beschichtung zugesetzt.

In einer sehr vorteilhaften Ausführungsform ist der Vernetzer ein Isocyanat, bevorzugt ein trimerisiertes Isocyanat. In besonders bevorzugter Weise sind die trimerisierten Isocyanate aliphatische oder mit Aminen deaktivierte Isocyanate.

Geeignete Isocyanate sind insbesondere trimerisierte Derivate von MDI [4,4-Methylendi(phenylisocyanat)], HDI [Hexamethylendiisocyanat, 1,6-Hexylendiisocyanat] und/oder IPDI [Isophorondiisocyanat, 5-Isocyanato-1-isocyanatomethyl-1,3,3-trimethylcyclohexan], beispielsweise die Typen Desmodur® N3600 und XP2410 (jeweils BAYER AG: Aliphatische Polyisocyanate, niedrigviskose HDI-Trimerisate). Auch sehr gut geeignet ist die oberflächendeaktivierte Dispersion von mikronisiertem trimerisiertem IPDI BUEJ 339®, jetzt HF9 ® (BAYER AG).

Grundsätzlich zur Vernetzung geeignet sind aber auch andere Isocyanate wie Desmodur VL 50 (Polyisocyanate am MDI-Basis, Bayer AG), Basonat F200WD (aliphatisches Polyisocyante, BASF AG), Basonat HW100 (wasseremulgierbares polyfunktionelles Isocyanat auf HDI-Basis, BASF AG), Basonat HA 300 (allophanatmodifiziertes Polyisocyanat auf Isocyanurat. HDI-Basis, BASF) oder Bayhydur VPLS2150/1 (hydrophil modifiziertes IPDI, Bayer AG) wobei diese Aufzählung nicht abschließend ist.

Bevorzugt geht man vor, indem man den thermischen Vernetzer, insbesondere das trimerisierte Isocyanat, zu 0,1 bis 5 Gew.-%, insbesondere zu 0,2 bis 1 Gew.-%, bezogen auf das Polyacrylat, einsetzt.

Bei einer Weiterentwicklung des erfindungsgemäßen Verfahrens beträgt die Temperatur des Polyacrylats bei der Zugabe des thermischen Vernetzers zwischen 60 °C und 120 °C, besonders bevorzugt zwischen 70 °C und 100 °C.

Vorteilhaft beträgt der Restmonomergehalt im Polyacrylat bei Zugabe des thermischen Vernetzers nicht mehr als 1 Gew.-%, insbesondere nicht mehr als 0,3 Gew.-%, bezogen auf das Polyacrylat.

Der Anteil der primäre Hydroxygruppen enthaltenden Acryl- und/oder Methacrylsäureester beträgt in bevorzugter Vorgehensweise bis zu 25 Gew.-%, bezogen auf das Polyacrylat.

Vorteilhaft beträgt der Restlösemittelgehalt im Polyacrylat nach Aufkonzentration und bei Zugabe des thermischen Vernetzers nicht mehr als 1 Gew.-%, insbesondere nicht mehr als 0,3 Gew.-%, bezogen auf das Polyacrylat.

Bei funktionalisierten Acrylatcopolymeren, die einpolymerisierte Acrylsäure enthalten, ist die Reaktionsgeschwindigkeit der Vernetzungsreaktion schneller. Hier gelingt ein prozessstabiler Prozess bevorzugt mit den langsameren aliphatischen Isocyanaten oder oberflächendeaktivierten Isocyanatemulsionen.

Für das erfindungsgemäße Selbstklebeband wird vorzugsweise ein Polyacrylat eingesetzt, welches auf die folgende Eduktmischung zurückgeführt werden kann:

a1) Acrylsäureester und/oder Methacrylsäureester der folgenden Formel

$$CH_2 = CH(R^I)(COOR^{II})$$

wobei R' = H oder $CH_3$ und R" eine Alkylkette mit 1 bis 20 C-Atomen ist, mit einem Anteil von 65 - 99 Gew.-%,
a2) Acrylate und/oder Methacrylate, deren Alkoholkomponente zumindest eine primäre Hydroxyl-Gruppe enthält, und/oder mit Acrylaten copolymerisierbare Vinylverbindungen, die zumindest eine primäre Hydroxyl-Gruppe enthalten, mit einem Anteil von 1 bis 20 Gew.-%,
a3) und, sofern sich die Anteile von a1) und a2) nicht zu 100 Gew.-% addieren, olefinisch ungesättigte Monomere mit funktionellen Gruppen, mit einem Anteil von 0 bis 15 Gew.-%.

Die Monomere werden bevorzugt dermaßen gewählt, dass die resultierenden Polymere eine Glasübergangstemperatur $T_G$ von - 50 °C bis + 10 °C aufweisen, im Sinne einer dynamischen Glasübergangstemperatur für amorphe Systeme und der Schmelztemperatur für semikristalline Systeme verstanden, die durch dynamisch mechanische Analyse (DMA) bei geringen Frequenzen bestimmt werden können.

Zur Erzielung einer entsprechend bevorzugten Glasübergangstemperatur $T_G$ der Polymere von - 50°C bis + 10°C werden entsprechend dem vorstehend gesagten die Monomere sehr bevorzugt derart ausgesucht und die mengenmäßige Zusammensetzung der Monomermischung vorteilhaft derart gewählt, dass sich nach einer Gleichung (G1) in Analogie zur Fox-Gleichung (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad (G1)$$

Hierin repräsentiert n die Laufzahl über die eingesetzten Monomere, $W_n$ den Massenanteil des jeweiligen Monomers n (Gew.-%) und $T_{G,n}$ die jeweilige Glasübergangstemperatur des Homopolymers aus den jeweiligen Monomeren n in K.

In einer sehr bevorzugten Weise werden für a1) Acryl- oder Methacrylmomonere eingesetzt, die aus Acryl- und Methacrylsäureester mit Alkylgruppen aus 1 bis 20 C-Atomen bestehen, bevorzugt 4 bis 9 C-Atomen umfassen. Spezifische Beispiele, ohne sich durch diese Aufzählung einschränken zu wollen, sind Methacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten Isomere, wie z.B. Isobutylacrylat, 2-Ethylhexylacrylat, 2-Ethylhexylmethacrylat, Isooctylacrylat, Isooctylmethacrylat. Weitere einzusetzende Verbindungsklassen für a1) sind monofunktionelle Acrylate bzw. Methacrylate von überbrückten Cycloalkylalkoholen, bestehend aus zumindestens 6 C-Atomen. Die Cycloalkylalkohole können auch substituiert sein, z.B. durch C-1-6-Alkylgruppen, Halogenatomen oder Cyanogruppen. Spezifische Beispiele sind Cyclohexylmethacrylate, Isobornylacrylat, Isobornylmethacrylate und 3,5-Dimethyladamantylacrylat.

In einer sehr bevorzugten Vorgehensweise werden für a2) Monomere eingesetzt, die Hydroxylgruppen, sehr bevorzugt primäre Hydroxylgruppen enthalten. Beispiel für a2) sind Hydroxyethylacrylat, Hydroxyethylmethacrylat, Hydroxypropylacrylat, Hydroxypropylmethacrylat, 6-Hydroxyhexylmethacrylat, 4-Hydroxystyrol, Allylalkohol wobei diese Aufzählung nicht abschließend ist.

Monomere für a3) sind z.B. olefinisch ungesättigte Monomere mit funktionellen Gruppen wie Carboxylsäuregruppen, Säureanhydridgruppen, Phosphonsäuregruppen, Amid- oder Imid- oder Aminogruppen, Isocyanatgruppen, Epoxygruppen oder Thiolgruppen. Beispiele für a3) sind Acrylsäure oder Methacrylsäure, Maleinsäureanhydrid, Itaconsäureanhydrid, Itaconsäure, Glyceridylmethacrylat, Glycerylmethacrylat, Vinylessigsäure, β-Acryloyloxypropionsäure, Trichloracrylsäure, Fumarsäure, Crotonsäure, Aconitsäure, Acrylonitril Dimethylacrylsäure, N,N-Dialkylsubstituierte Amide, wie z.B. N,N-Dimethylacrylamid, N,N-Dimethylmethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Buthoxymethyl)methacrylamid, N-Methylolacrylamid, N-(Ethoxymethyl) acrylamid, N-Isopropylacrylamid, wobei diese Aufzählung nicht abschließend ist.

Bei dem erfindungsgemäßen Verfahren zur Herstellung von vernetzten Polyacrylaten werden die reaktiven Vernetzer dem zu vernetzenden Polyacrylat sehr bevorzugt unter genauer Temperatur- und Zeitkontrolle zugesetzt wird. Die Masse wird zu einer Beschichtungseinheit gefördert und auf einen Träger übertragen, bevorzugt mittels 2-Walzen, Mehrwalzen- oder Düsenbeschichtung.

Die Zeit nach Zudosierung des Vernetzungssystems im Compoundieraggregat bis zum Ausformen auf einen Träger wird als Verarbeitungszeit bezeichnet. Innerhalb dieser Zeit kann die nun vernetzende Haftklebmasse gelfrei und mit optisch gutem Strichbild beschichtet werden. Die Vernetzung erfolgt dann hauptsächlich nach der Beschichtung auf der Bahn unter milden Bedingungen, die weder Träger noch Liner schädigen, insbesondere also ohne den Einfluss aktinischer Strahlung (wie UV-Bestrahlung oder Elektronenstrahlen).

Im folgenden werden einige erfindungsgemäß vorteilhafte Verfahrensschritte vorgestellt, die einzeln oder in Kombination einiger oder aller Verfahrensschritte zu einer verbesserten Verbesserung des Verfahrensablauf eingesetzt werden können.

Für die erfinderischen Selbstklebebänder, insbesondere Transferklebebänder, besonders geeignet sind Polyacrylate, die durch Bulk-, Lösungs- oder Emulsionspolymerisation hergestellt worden sind und gegebenenfalls anschließend, insbesondere falls sie flüchtige Bestandteile einhalten, aufkonzentriert wurden. Sehr bevorzugt sind Polyacrylate, die auch Lösungspolymerisation hergestellt worden sind und anschließend in einem Entgasungsextruder analog der Beschreibung in Offenlegungsschrift DE 10221402.6, Seite 3, Zeile 22 - 68 aufkonzentriert wurden. Die Polyacrylate haben in einer bevorzugten Vorgehensweise ein gewichtsmittleres Molekulargewicht $M_w$ von mindestens 300.000 g/mol bis maximal 1.500.000 g/mol. Die Bestimmung des mittleren Molekulargewichtes erfolgt über Größenausschlusschromatographie (GPC) oder Matrix-unterstützte Laser-Desorption/Ionisations-Massenspektrometrie (MALDI-MS). Die Polyacrylate enthalten mindestens ein Comonomer, welches eine oder mehrere primäre Hydroxygruppen enthält. Es kann vorteilhaft sein, die Polymerisation in Gegenwart von Polymerisationsreglern wie Thiolen, Halogenverbindungen und insbesondere Alkoholen (Isopropanol) durchzuführen, um das gewünschte ein gewichtsmittlere Molekulargewicht $M_w$ einzustellen.

Die Polymerisationszeit beträgt - je nach Umsatz und Temperatur - zwischen 2 und 72 Stunden.

Für das erfindungsgemäße Verfahren besonders geeignet sind auch Polyacrylate, die eine enge Molekulargewichtsverteilung (Polydispersität < 4) haben. Diese Massen sind bei relativ niedrigem Molekulargewicht nach dem Vernetzen besonders scherfest. Da im Vergleich zu einem normal verteilten Polyacrylat bei einem eng verteilten bei gleichem Kohäsionsniveau ein niedrigeres Molekulargewicht erforderlich ist, reduzieren sich Viskosität und Prozesstemperaturen. Somit ermöglicht ein eng verteiltes Polyacrylate eine besonders lange Verarbeitungszeit.

Eng verteilte Polyacrylate können durch anionische Polymerisation oder durch kontrollierte radikalische Polymerisationsmethoden hergestellt werden, wobei letzteres besonders gut geeignet ist. Beispiele sind in US 6,765,078 B2 und DE 100 36 901 A1 bzw. US 2004/0092685 A1 beschrieben. Auch die Atom Transfer Radical Polymerization (ATRP) lässt sich in vorteilhafter Weise zur Synthese eng verteilter Polyacrylate einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir- , Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

Für die erfindungsgemäßen Selbstklebebänder besonders geeignet als hartmachende Comonomere können auch Makromonomere in das Polyacrylat einpolymerisiert sein. Besonders geeignet sind Makromonomere, wie sie in der EP 1 361 260 A1 beschrieben werden, beispielsweise 2-Polystyrolethylmethacrylat mit einem Molekulargewicht $M_w$ von etwa 13.000 g/mol. Selbstklebebänder auf der Basis makromonomermodifizierter thermisch vernetzter Acrylathotmelts zeichnen sich durch eine gute Beschichtbarkeit und erhöhter Kohäsion aus.

Optional können die üblichen klebrigmachenden Harze dem Polyacrylat in der Schmelze oder noch vor der Aufkonzentration in Lösung zugesetzt werden. Als zuzusetzende klebrigmachende Harze sind ausnahmslos alle vorbekannten und in der Literatur beschriebenen Klebharze einsetzbar. Genannt seien stellvertretend die Pinen-, Indenund Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie $C_5$-, $C_9$- sowie andere Kohlenwasserstoffharze. Beliebige Kombinationen dieser und weiterer Harze können eingesetzt werden, um die Eigenschaften der resultierenden Klebmasse wunschgemäß einzustellen. Besonders vorteilhaft lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Ein bevorzugtes Terpenphenolharze ist beispielsweise Dertophene T 110, ein bevorzugtes hydriertes Kolophoniumderivat Foral 85.

Weiter optional können auch pulver- und granulatförmige Füllstoffe, Farbstoffe und Pigmente, besonders auch abrasive und verstärkende, wie z.B. Kreiden ($CaCO_3$) Titandioxide, Zinkoxide und Ruße zugesetzt werden. Bevorzugt können verschiedene Kreideformen als Füllstoff eingesetzt werden, wobei besonders bevorzugt Mikrosöhl-Kreide (Fa. Söhlde) eingesetzt wird. Bei bevorzugten Anteilen bis zu 20 Gew.-% verändern sich die klebtechnischen Eigenschaften (Scherfestigkeit bei RT, Sofortklebkraft auf Stahl und PE) durch den Füllstoffzusatz praktisch nicht. Ebenfalls bevorzugt können verschiedene organische Füllstoffe wie die unterschiedlichsten Kunststoffkugeln zugesetzt werden.

Weiterhin können schwerentflammbare Füllstoffe, wie beispielsweise Ammoniumpolyphosphat, weiterhin elektrisch leitfähige Füllstoffe, wie beispielsweise Leitruß, Kohlenstofffasern und/oder silberbeschichtete Kugeln, weiterhin ferromagnetische Additive, wie beispielsweise Eisen-(III)-oxide, Alterungsschutzmitteln, Lichtschutzmitteln, Ozonschutzmitteln vor oder nach der Aufkonzentration des Polyacrylat zugegeben oder eincompoundiert werden.

Optional können die üblichen Weichmacher zugesetzt werden. Als Weichmacher können z.B. niedermolekulare Polyacrylate, Phthalate, wasserlösliche Weichmacher, Weichharze, Phosphate oder Polyphosphate zudosiert werden.

Die Zugabe und Einarbeitung des thermisch reaktiven Vernetzungssystems in die Polyacrylatmatrix erfolgt in kontinuierlich arbeitenden Compoundierungsaggregaten. Diese Aggregate sind erfindungsgemäß so konzipiert, dass bei guter Durchmischung und gleichzeitig geringem Eintrag von Scherenergie eine kurze Verweilzeit der Masse nach der Dosierung des Vernetzungssystems gewährleistet wird. Vorzugsweise sind die Compoundierungsaggregate Doppelschnecken- und/oder Planetwalzenextruder. Dabei ist es besonders vorteilhaft, wenn die Spindeln des Extruders temperierbar und/oder kühlbar sind. Die Zugabe der Vernetzer erfolgt an einer oder an mehreren Stellen der Aggregate, vorzugsweise in druckfreien Zonen. Günstig ist auch, wenn die thermisch reaktiven Vernetzersubstanzen fein verteilt dem Polyacrylat zugesetzt werden, beispielsweise als Aerosol, in feinen Tröpfchen oder verdünnt in einem geeigneten Verdünnungsmittel wie einem polymerverträglichen Weichmacher.

Soll die resultierende Schmelzhaftklebemasse additiviert werden, ist es sinnvoll, dem Polyacrylat, bevorzugt vor dem Zusatz des thermischen Vernetzers, Glasvollkugeln, Glashohlkugeln oder expandierende Mikroballons zuzusetzen. Im Falle der Verwendung von expandierenden Mikroballons wird die Masse bzw. die ausgeformte Schicht in geeigneter Weise mittels Wärmeeintrag aktiviert.

In einem weiteren Verfahrensschritt, der zusätzlich zur Zugabe der vorgenannten Zusatzstoffe, aber auch unabhängig von ihr erfolgen kann, kann die Schmelzhaft-klebemasse durch Einbringen von komprimierten Gasen wie Kohlendioxyd, Luft oder Stickstoff oder Blähmitteln geschäumt werden. Es ist zudem sinnvoll, die geschäumten Schichten nach der Schäumung mittels Walzen oder Trennpapieren bzw. -folien zu glätten.

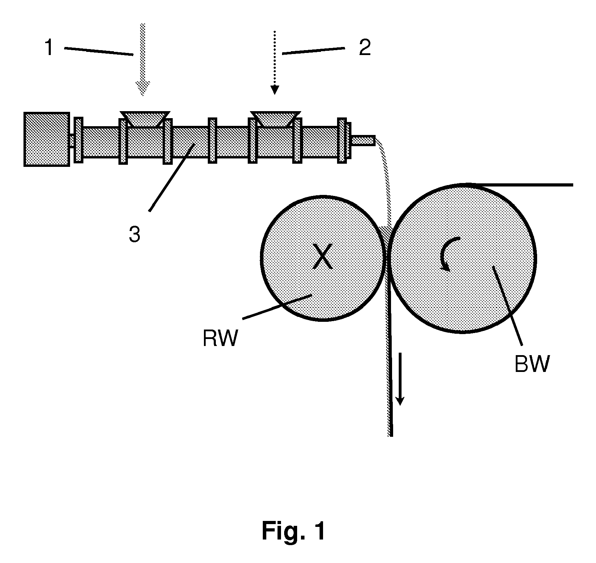

Das mit dem Vernetzer versehene Polyacrylat wird zu einer Beschichtungseinheit gefördert, besonders bevorzugt mit einem Extruder, noch mehr bevorzugt mit dem Compoundierungsextruder, in dem bereits der Vernetzer zugesetzt wurde und in dem ggf. bereits die Aufkonzentration des Polyacrylates stattgefunden hat; vgl. hierzu die schematische Darstellung in Figur 1; dabei bedeuten: 1.1 Polyacrylateingabe, 1.2: Vernetzerzugabe, 1.3: Extruder, RW: Rakelwalze; BW: Beschichtungswalze). Es ist also erfindungsgemäß vorteilhaft, die Aufkonzentration des Polyacrylats, die Vernetzerzugabe und -compoundierung und den Massetransport in einem einzigen Extruder oder in Extruderlinien zu realisieren, so dass man ausgehend von dem lösungsmittelhaltigen Basispolymerisat am Ausgang des Extruders bzw. der Extruderlinie ohne zusätzliche Produktionsschritte die erfindungsgemäße, fertig compoundierte, weitgehend lösungsmittelfreie, harz-, füllstoff- und vernetzerabgemischte Selbstklebemasse erhält und dann der Beschichtung zuführt.

Die Beschichtung der Selbstklebemassen erfolgt bevorzugt mit Walzenauftragswerken, auch Beschichtungskalander genannt. Die Beschichtungskalander können aus zwei, drei oder mehr Walzen bestehen. Im Folgenden werden verschiedene erfinderisch geeignete Ausführungsformen beschrieben. Durch die Angabe der Beschichtungsverfahren soll die Erfindung jedoch nicht unnötig beschränkt werden.

Variante A: Zweiwalzenauftragswerk (Fig. 1)

Ein Zweiwalzenkalander (vgl. Fig. 1) eignet sich insbesondere zur Herstellung von Klebebändern mit Schichtdicken zwischen 5 μm und 5000 μm bei niedrigen und moderaten Beschichtungsgeschwindigkeiten von 1 m/min bis 50 m/min.

Die zwei Walzen (W1) und (W2) sind derart angeordnet, dass sie einen Spalt bilden, in welchen die Selbstklebemasse (3) beispielsweise mittels einer Verteilerdüse (1) eingebracht wird. Die erste Walze (BW) ["Beschichtungswalze"] führt den temporären Träger (2), auf den die Selbstklebemasse (3) beschichtet werden soll. Die zweite Walze (RW) ["Rakelwalze"] führt einen antiadhäsiv ausgerüsteten Hilfsträger (5) und presst mittels des Hilfsträgers auf die Klebemasse, so dass diese auf den temporären Träger (2) als Schicht (4) abgelegt wird. An der Position (6) wird der antiadhäsiv ausgerüstete Hilfsträger (5) von der Selbstklebemassenschicht (4) wieder abgenommen. Das Klebeband (6) bestehend aus der Klebemassenschicht (4) auf dem temporären Träger (2) wird aus der Beschichtungsanlage herausgeführt.

Bei Schichtdicken bis ca. 500 μm kann auf den antiadhäsiv ausgerüsteten Hilfsträger (5) verzichtet werden, so dass die Klebmasse (3) direkten Kontakt zur Rakelwalze (RW) hat.

Als Materialien für den temporären Träger (2) können nahezu alle in der Klebeband-herstellung bekannten Trägermaterialien verwendet werden, so zum Beispiel thermoplastische Folien PE, PP, PET, Papiere, Gewebe, auch Trennfolien und andere antiadhäsive ausgerüstete Trägertypen. Die Oberflächentemperaturen der Walzen werden zwischen 25 °C und 200 °C, bevorzugt zwischen 60 °C und 150 °C und besonders bevorzugt zwischen 80 °C und 120 °C eingestellt. Als Oberflächen für die beiden verwendeten Kalanderwalzen eignen sich die dem Fachmann geläufigen Materialien wie Stahl, verchromter Stahl, rostfreier Stahl, Kunststoffe, Silikone, Keramiken sowie denkbare Kombinationen aus den genannten Materialien.

Wenn Schichtdicken bis ca. 500 $\mu$m beschichtet werden sollen und auf den Hilfsträger (5) verzichtet wird, ist eine antiadhäsiv ausgerüstete Walzenoberfläche der Rakelwalze (RW) vorteilhaft. Solche eine Walzenoberfläche kann beispielsweise aus dem Material mit der Bezeichnung PALLAS SK-B-012/5 der Fa. PALLAS OBERFLÄCHENTECHNIK GMBH, Deutschland oder aus dem Material mit der Bezeichnung AST 9984-B der Fa. ADVANCED SURFACE TECHNOLOGIES, Deutschland, bestehen. Bei diesen Oberflächen handelt es sich um Metall-Keramik-Silikon-Verbundwerkstoffe, die sich durch gute antiadhäsive Eigenschaften bei gleichzeitig hoher Standfestigkeit unter den gewählten Prozessbedingungen auszeichnen.

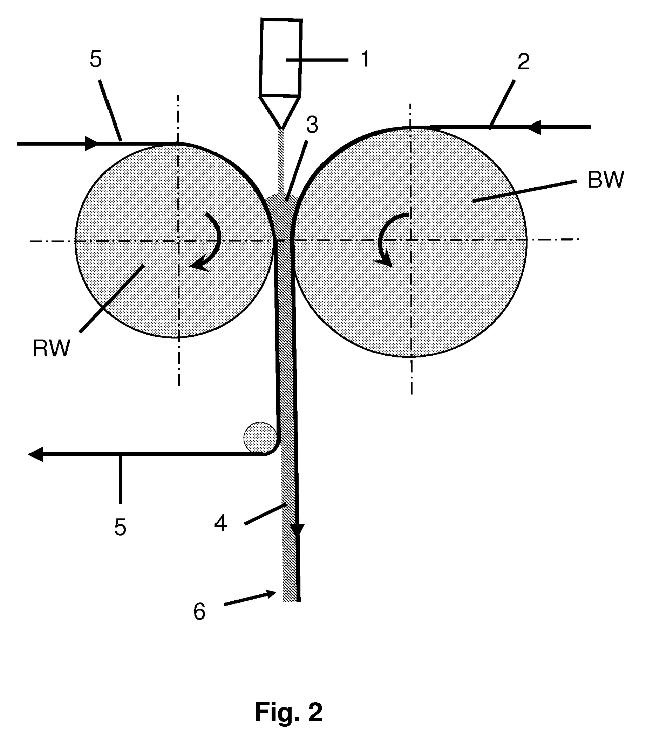

Variante B: Dreiwalzenkalander (Fig. 2).

Sehr vorteilhaft lassen sich Mehrwalzensysteme zur Beschichtung einsetzen. Fig. 2 zeigt das Prinzip des Dreiwalzenauftragswerkes: Über eine Verteilerdüse (1) wird die Klebemasse (3) wiederum in einen durch eine erste Walze (ÜW) ["Überführungswalze"] und eine Rakelwalze (RW) gebildeten Spalt gegeben. Die Selbstklebemasse wird dabei zeitweilig auf der Überführungswalze (ÜW) abgelegt und von dieser zu einer dritten Walze (FW) ["Führungswalze"] geführt, die das temporäre Trägermaterial (2) an die Klebmassenschicht heranbringt. Beim Durchlauf durch den zwischen der Überführungswalze (ÜW) und der Führungswalze (BW) gebildeten Spalt wird die Klebmassenschicht (4) von der Oberfläche der Überführungswalze (ÜW) auf das temporäre Trägermaterial (2) abgelegt und als Klebeband (6) aus der Beschichtungsanlage herausgeführt.

Die Drehrichtungen der einzelnen Walzen ist in der Figur durch die jeweilige Pfeilrichtung dargestellt.

Für den Fachmann völlig überraschend ist die Tatsache, das die zum Teil stark eigenklebrigen, mit Klebharz abgemischten, lösungsmittelfreien Selbstklebemassen auf Polyacrylatbasis mittels 3-Walzenkalander beschichtet werden können, und zwar erstaunlicherweise auch auf antiadhäsiv ausgerüstete Trägermaterialien wie Trennpapiere und Trennfolien. Zu erwarten gewesen wäre vielmehr, dass die Klebmasse nach dem Verlassen der Verteilerdüse zumindest teilweise auf der Rakelwalze (RW) verbleiben und nicht als homogener Selbstklebemassefilm auf die Überführungswalze (ÜW) übertragen würde. Des weiteren wäre nicht zu vermuten gewesen, dass die auf Überführungswalze (ÜW) ausgeformte Selbstklebemasse mit optisch weitgehend homogenem Beschichtungsbild auf das Trägermaterial übertragen werden kann. Vielmehr wäre zu erwarten gewesen wäre, dass der Klebmassenfilm auf der Überführungswalze (ÜW) verbleiben oder nur unvollständig den Träger übergeben würde. Erstaunlicherweise werden stattdessen sogar Klebebänder mit gutem Beschichtungsbild, d.h. mit optisch weitgehend homogener Oberfläche, erzeugt.

Besonders gute Ergebnisse werden durch die Verwendung von Kalanderwalzen erzielt, die mit antiadhäsiven Oberflächen ausgerüstet sind. Verschiedene Arten antiadhäsiver Oberflächenbeschichtungen können für die Kalanderwalzen verwendet werden. Als besonders geeignet haben sich auch hier zum Beispiel die bereits vorstehend genannten Metall-Keramik-Silikon-Verbundwerkstoffe PALLAS SK-B-012/5 der Fa. PALLAS OBERFLÄCHENTECHNIK GMBH, Deutschland sowie AST 9984-B der Fa. ADVANCED SURFACE TECHNOLOGIES, Deutschland, erwiesen.

Aufgrund der hohen in den Walzenspalten auftretenden Drücken, gegebenenfalls auch Differenzgeschwindigkeiten der Walzen zueinander, erscheinen reine Silikon- oder TEFLON®-Beschichtungen nur bedingt geeignet, da sie entweder mechanisch zerstört werden und/oder mit der Zeit ihre antiadhäsiven Eigenschaften verlieren.

Mit dem beschriebenen 3-Walzenbeschichtungskalander können insbesondere Selbstklebemassen mit Schichtdicken zwischen 5 $\mu$m und 300 $\mu$m auf Trägermaterialien beschichtet werden, bevorzugt mit Schichtdicken zwischen 20$\mu$m und 250$\mu$m und besonders bevorzugt mit Schichtdicken zwischen 50$\mu$m und 200 $\mu$m.

Die Beschichtungsgeschwindigkeit, gemeint ist hier die Umfangsgeschwindigkeit der Führungswalze (FW), die damit der Bahngeschwindigkeit des Trägermaterials entspricht, kann vorteilhaft zwischen 1 m/min und 400 m/min, bevorzugt zwischen 10 m/min und 300 m/min eingestellt werden. Die Umfangsgeschwindigkeit der Überführungswalze (ÜW) kann vorteilhaft auf 5 % bis 110 % der Bahngeschwindigkeit eingestellt werden, bevorzugt auf 50 % bis 110 % der Bahngeschwindigkeit und besonders bevorzugt auf 80 % bis 110 % der Bahngeschwindigkeit. Die Umfangsgeschwindigkeit der Rakelwalze (RW) kann vorteilhaft auf 0 m/min ("statischer Andruck") bis auf 5 % der Bahngeschwindigkeit eingestellt werden. Neben den Walzenumfangsgeschwindigkeiten sind auch die Walzenspalte einzustellen. Gemeint sind hier die Abstände der Rakelwalze (RW) zur Überführungswalze (W2) sowie der Abstand der Überführungswalze (W1) zur Führungswalze (FW).

Die Walzenspalte werden bevorzugt so eingestellt, dass die oben beschriebenen Schichtdicken bei den oben beschriebenen Walzenoberflächengeschwindigkeiten erreicht werden.

Die Walzenoberflächentemperaturen werden vorteilhaft auf 40 °C bis 160 °C eingestellt, bevorzugt auf 60 °C bis 140 °C und besonders bevorzugt auf 80 °C bis 120 °C. Dabei können alle drei Walzen des Kalanders auf die gleiche Temperatur eingestellt werden, es können aber auch pro Walze unterschiedliche Oberflächentemperaturen eingestellt werden. Die Walzenoberflächentemperaturen sind jeweils der Beschaffenheit der Walzenoberflächen, der zu beschichtenden Klebmasse und der zu beschichtenden Träger anzupassen.

Es folgt beispielhaft eine Übersicht geeigneter Walzenoberflächen, die sich als besonders vorteilhaft erwiesen haben:

Rakelwalze (RW)

- SK-B-012/5 der Fa. PALLAS OBERFLÄCHENTECHNIK GmbH, Deutschland
- AST 9984-B der Fa. ADVANCED SURFACE TECHNOLOGIES, Deutschland
- verchromter Stahl
- Stahl, Oberflächenrauhigkeit RZ 10 bis RZ 35
- TEFLON®
- Silikon

Überführungswalze (ÜW)

- SK-B-012/5 der Fa. PALLAS OBERFLÄCHENTECHNIK GmbH, Deutschland
- AST 9984-B der Fa. ADVANCED SURFACE TECHNOLOGIES, Deutschland Führungswalze (FW)
- Silikon-Gummi, 60 bis 80 shore

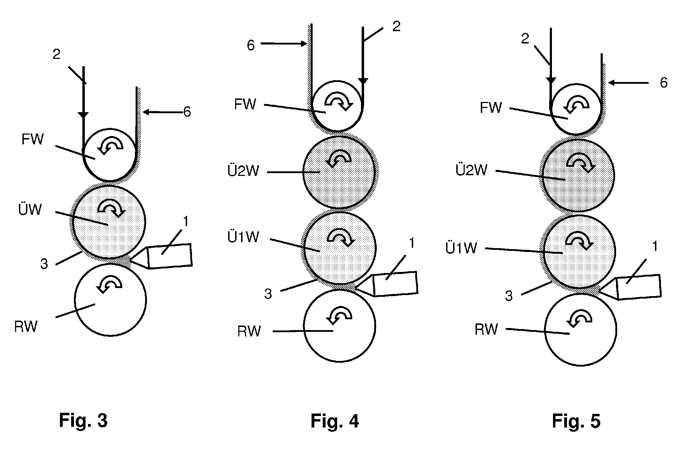

Variante C: Vierwalzenkalander (Gleich-Gleichlauf) (vgl. Fig. 3)

In Fig. 3 ist eine weitere günstige Beschichtungsanlage dargestellt. Ausgehend von der vorstehend beschriebenen Anlage ist zwischen der ersten Überführungswalze (Ü1 W) und der Führungswalze (FW) eine zweite Überführungswalze (Ü2W) vorgesehen. Im Spalt zwischen der ersten Überführungswalze (Ü1W) und der zweiten Überführungswalze (Ü2W) wird die Klebemassenschicht (4) von der ersten Überführungswalze (Ü1 W) abgenommen und auf die zweite Überführungswalze (Ü2W) aufgelegt. Von dieser zweiten Überführungswalze wird die Klebmassenschicht (4) wieder auf das Trägermaterial übertragen, wie es analog beim Dreiwalzenauftragswerk bereits beschrieben wurde. Die Walzen sind dabei im Gleich-Gleichlauf geschaltet, vergleiche die in der Fig. A3 durch Pfeile angezeigten Drehrichtungen der einzelnen Walzen. Mit dem beschriebenen Vierwalzenbeschichtungskalander (Gleich-Gleichlauf-Betrieb) können - wie mit dem als Variante B beschriebenen Dreiwalzenverfahren - sehr vorteilhaft Selbstklebemassen mit Schichtdicken zwischen 5 $\mu$m und 300 $\mu$m auf Trägermaterialien beschichtet werden, bevorzugt mit Schichtdicken zwischen 20 $\mu$m und 250 $\mu$m und besonders bevorzugt mit Schichtdicken zwischen 50 $\mu$m und 200 $\mu$m. Diese Kalanderkonfiguration kann insbesondere besonders bevorzugt gewählt werden, wenn Klebmassen mit hoher Viskosität beschichtet werden sollen oder wenn eine besonders glatte Oberflächenstruktur des fertigen Klebebandes gefordert ist.

Die Beschichtungsgeschwindigkeit (wieder im Sinne der Umfangsgeschwindigkeit der Führungswalze (FW) und der Bahngeschwindigkeit) kann vorteilhaft zwischen 0,5 m/min und 400 m/min, bevorzugt zwischen 10 m/min und 300 m/min eingestellt werden. Die Umfangsgeschwindigkeit der Rakelwalze (RW) kann auch hier vorteilhaft auf 0 m/min bis auf 5 % der Bahngeschwindigkeit eingestellt werden.

Die Umfangsgeschwindigkeit der ersten Überführungswalze (Ü1W) kann bevorzugt auf 5 % bis 80 % der Bahngeschwindigkeit eingestellt werden, mehr bevorzugt auf 10% bis 50 % der Bahngeschwindigkeit und besonders bevorzugt auf 20 % bis 30 % der Bahngeschwindigkeit.

Die Umfangsgeschwindigkeit der zweiten Überführungswalze (Ü2W) kann bevorzugt auf 10 % bis 110 % der Bahngeschwindigkeit eingestellt werden, mehr bevorzugt auf 50 % bis 110 % der Bahngeschwindigkeit und besonders bevorzugt auf 80 % bis 110 % der Bahngeschwindigkeit.

Die Walzenspalte (jeweils zwischen den Walzen AW und Ü1W, Ü1W und Ü2W bzw. Ü2W und FW) werden wiederum bevorzugt so eingestellt, dass die vorstehend beschriebenen Schichtdicken bei den vorstehend beschriebenen Walzenoberflächengeschwindigkeiten erreicht werden.

Die Walzenoberflächentemperaturen werden vorteilhaft auf 40 °C bis 160 °C eingestellt, bevorzugt auf 60 °C bis 140 °C und besonders bevorzugt auf 80 °C bis 120 °C. Dabei können alle 4 Walzen des Kalanders auf die gleiche Temperatur eingestellt werden, es können aber auch pro Walze unterschiedliche Oberflächentemperaturen eingestellt werden. Die Walzenoberflächentemperaturen sind jeweils der Beschaffenheit der Walzenoberflächen, der zu beschichtenden Klebmasse und der zu beschichtenden Träger anzupassen.

Es folgt auch hier eine Übersicht der erfindungsgemäß besonders vorteilhaft einsetzbaren Walzenoberflächen, ohne dass die Erfindung durch diese Angabe unnötig eingeschränkt werden soll:

Rakelwalze (RW)

- SK-B-012/5 der Fa. PALLAS OBERFLÄCHENTECHNIK GMBH,Deutschland
- AST 9984-B der Fa. ADVANCED SURFACE TECHNOLOGIES, Deutschland
- verchromter Stahl
- Stahl, Oberflächenrauhigkeit RZ 10 bis RZ 35
- TEFLON®
- Silikon

Erste Überführungswalze (Ü1W)

- AST 9984-B der Fa. ADVANCED SURFACE TECHNOLOGIES, Deutschland Zweite Überführungswalze (Ü2W)
- SK-B-012/5 der Fa. PALLAS OBERFLÄCHENTECHNIK GMBH,Deutschland Führungswalze
- Silikon-Gummi, 60 bis 80 shore

Verfahren 4D:Vierwalzenkalander (Gleich-Gegenlauf) (vgl. Fig. 4)

Die Fig, 4 zeigt einen ebenfalls vorteilhaft einsetzbaren Vierwalzenkalander, der jedoch im Gleich-Gegenlauf betrieben wird. In der Betriebsführung unterscheidet sich die Variante D von der Variante C dadurch, dass die Klebmassenschicht nicht zwischen den Überführungswalze Ü1W und Ü2W hindurchgezogen wird und dabei von der ersten Überführungswalze Ü1W auf die zweite Überführungswalze Ü2G übergeben wird, sondern durch die gleiche Drehrichtung der ersten und der zweiten Überführungswalze erfährt die Klebemasse beim Übergang von der ersten auf die zweiten Überführungswalze eine Richtungsänderung (Gegenlauf), vgl. hierzu die Darstellung in Figur 4 und insbesondere die dort gezeigten Drehrichtungen der Walzen.

Mit dem hier beschriebenen Vierwalzenbeschichtungskalander können wie mit der in Verfahren C beschriebenen Vierwalzenkalanderkonfiguraiton hervorragend Selbstklebe-massen beschichtet werden. Diese Kalanderkonfiguration zeichnet sich dadurch aus, dass die zweite Überführungswalze Ü2W eine der ersten Überführungswalze Ü1W entgegengesetzte Drehrichtung am Walzenspalt zwischen diesen beiden Walzen aufweist. Dadurch ist es möglich, Klebebänder mit hohen Schichtdicken zwischen 100 $\mu$m und 1000 $\mu$m herzustellen, bevorzugt mit Schichtdicken zwischen 200 $\mu$m und 800 $\mu$m und besonders bevorzugt mit Schichtdicken zwischen 300 $\mu$m und 600 $\mu$m.

Die Beschichtungsgeschwindigkeit, gemeint ist wiederum die Umfangsgeschwindigkeit der Führungswalze FW, kann vorteilhaft zwischen 0,5 m/min und 400 m/min, bevorzugt zwischen 10 m/min und 300 m/min eingestellt werden.

Die Umfangsgeschwindigkeit der Rakelwalze AW kann vorteilhaft auf 0 m/min bis auf 5 % der Bahngeschwindigkeit eingestellt werden.

Die Umfangsgeschwindigkeit der ersten Überführungswalze Ü1W kann vorteilhaft auf 5 % bis 130 % der Bahngeschwindigkeit eingestellt werden, bevorzugt auf 10 % bis 50 % der Bahngeschwindigkeit und besonders bevorzugt auf 20 % bis 30 % der Bahngeschwindigkeit.

Die Umfangsgeschwindigkeit der zweiten Überführungswalze Ü2W kann vorteilhaft auf 10 % bis 110 % der Bahngeschwindigkeit eingestellt werden, bevorzugt auf 50 % bis 110 % der Bahngeschwindigkeit und besonders bevorzugt auf 80 % bis 110 % der Bahngeschwindigkeit.

Auch bei dieser Variante werden die Walzenspalte werden eingestellt, dass die oben beschriebenen Schichtdicken bei den oben beschriebenen Walzenoberflächen-geschwindigkeiten erreicht werden.

Die Walzenoberflächentemperaturen werden erfindungsgemäß günstig auf 40 °C bis 160 °C eingestellt, bevorzugt auf 60 °C bis 140 °C und besonders bevorzugt auf 80 °C bis 120 °C. Dabei können alle 4 Walzen des Kalanders auf die gleiche Temperatur eingestellt werden, es können aber auch pro Walze unterschiedliche Oberflächentemperaturen eingestellt werden. Die Walzenoberflächentemperaturen sind jeweils der Beschaffenheit der Walzenoberflächen, der zu beschichtenden Klebmasse und der zu beschichtenden Träger anzupassen.

Für diese Variante D wird ebenfalls eine Übersicht der eingesetzten Walzenoberflächen gegeben, ohne sich unnötig den erfinderischen Gegenstand beschränken zu wollen:

Rakelwalze AW

- SK-B-012/5 der Fa. PALLAS OBERFLÄCHENTECHNIK GMBH,Deutschland
- AST 9984-B der Fa. ADVANCED SURFACE TECHNOLOGIES, Deutschland
- verchromter Stahl
- Stahl, Oberflächenrauhigkeit RZ 10 bis RZ 35
- TEFLON®
- Silikon

Überführungswalze Ü1W

- AST 9984-B der Fa. ADVANCED SURFACE TECHNOLOGIES, Deutschland Überführungswalze Ü2W
- SK-B-012/5 der Fa. PALLAS OBERFLÄCHENTECHNIK GMBH,Deutschland Führungswalze FW
- Silikon-Gummi, 60 bis 80 shore

Direkt nach der Beschichtung mittels Walzenauftrag, insbesondere in einer der vorgenannten Varianten, oder mittels Extrusionsdüse ist die Klebemasse nur leicht anvernetzt, aber noch nicht ausreichend vernetzt. Beschichtung heißt in diesem Zusammenhang das Ausformen der mit Vernetzer abgemischten, weitestgehend lösungsmittelfreien Klebmasse in dünne Schichten und Auftragen auf ein bahnförmiges temporäres Trägermaterial. Die Verarbeitungszeit beträgt 3 - 30 Minuten, bevorzugt 5 - 20 Minuten, besonders bevorzugt 5 - 10 Minuten. Niedrigviskose Systeme werden vorzugsweise mit Düsen, höher viskose mit 2-Walzenwerken oder Mehrwalzwerken beschichtet.

Die Vernetzungsreaktion verläuft vorteilhaft auf dem temporären Träger. Die Reaktion insbesondere mit Isocyanaten verläuft bevorzugt ohne Katalyse. Die Vernetzungsreaktion verläuft auch ohne Wärmezufuhr bei Normalbedingungen (Raumtemperatur) vollständig ab. In der Regel ist nach einer bis zu 14-tägigen, insbesondere einer vier- bis zehntägigen Lagerung die Vernetzungsreaktion mit dem multifunktionalisierten Isocyanat weitestgehend abgeschlossen und die endgültige Kohäsion der Masse erreicht.

Durch die Vernetzung mit Isocyanaten bilden sich Urethangruppen aus, die die Polymerketten verknüpfen. Durch die Verknüpfung erhöhen sich die Kohäsion der Klebemasse und damit auch die Scherfestigkeit. Diese Gruppen sind bekanntermaßen sehr stabil. Dies ermöglicht sehr alterungsstabile und wärmebeständige Selbstklebebänder.

Die physikalischen Eigenschaften des Endproduktes, insbesondere dessen Viskosität, Klebkraft und Anfassklebrigkeit, können durch den Grad der Vernetzung beeinflusst werden, so dass sich durch geeignete Wahl der Reaktionsbedingungen das Endprodukt optimieren lässt. Diverse Faktoren bestimmen das Prozessfenster dieses Verfahrens. Die wichtigsten Einflussgrößen sind Prozess- und Beschichtungstemperatur, Verweilzeit in Compoundierextruder und Beschichtungsaggregat, Vernetzertyp (deaktiviert, aliphatisch, aromatisch), Vernetzerkonzentration, Anteil an Hydroxygruppen im Polymer, Anteil an copolymerisierten Säuregruppen im Polymer sowie das mittlere Molekulargewicht des Polyacrylats.

Im Folgenden werden einige Zusammenhänge bei der Herstellung der erfindungsgemäßen Selbstklebemasse beschrieben, die das Verfahren zur Herstellung optimieren, aber nicht einschränkend für den erfindungsgemäßen Gedanken sind:

Bei gleich bleibender Vernetzerkonzentration führt eine Erhöhung der Prozesstemperatur zu einer verringerten Viskosität, dies verbessert die Beschichtbarkeit der Masse, reduziert jedoch die Verarbeitungszeit. Eine Erhöhung der Verarbeitungszeit erhält man durch Verringerung der Vernetzerkonzentration, Erniedrigung des Molekulargewichts, Verringerung der Konzentration an Hydroxygruppen im Polymer, Verringerung des Säureanteils im Polymer, Verwendung von weniger reaktiven Isocyanaten und Verringerung der Prozesstemperatur. Eine Kohäsionsverbesserung der Masse kann man auf unterschiedlichen Wegen erhalten. Entweder wird die Vernetzerkonzentration erhöht, was die Verarbeitungszeit reduziert. Man kann bei gleich bleibender Vernetzerkonzentration auch das Molekulargewicht des Polyacrylats erhöhen, was möglicherweise effizienter ist. Je nach gewünschtem Anforderungsprofil der Masse bzw. des Produktes müssen die oben genannten Parameter in geeigneter Weise angepasst werden.

Zur Abdeckung der Haftklebeschicht des einschichtigen Selbstklebebandes wird dieses vorteilhaft auf die allgemein bekanten Trennmaterialien (Liner) kaschiert. Geeignete Liner sind einseitig oder beidseitig silikonisierte Polyesterfolien, da sie besonders glatte Oberflächen ermöglichen.

Für bestimmte Anwendungen kann das dann als Zwischenprodukt vorliegende erfindungsgemäße Klebeband durch zusätzliche Bestrahlung mittels aktinischer Strahlung (beispielsweise UV-Licht oder Elektronenstrahlen) weiter den Erfordernissen angepasst bzw. verbessert werden.

Gegenstand der Erfindung ist insbesondere die Verwendung des wie oben beschriebenen Selbstklebebandes oder des wie vorstehend beschrieben hergestellten Selbstklebebandes als Transferklebeband.

**Beispiele**

Die folgenden beispielhaften Experimente sollen die Erfindung näher erläutern, ohne dass durch die Wahl der angegebenen Beispiele die Erfindung unnötig eingeschränkt werden soll.

Testmethoden:

Feststoffgehalt:

Der Feststoffgehalt ist ein Maß für den Anteil an nicht Verdampfbaren in einer Polymerlösung. Er wird gravimetrisch bestimmt, indem man die Lösung einwiegt, dann für 2 Stunden bei 120 °C im Trockenschrank die verdampfbaren Anteile abdampft und den Rückstand zurückwiegt.

K-Wert (nach FIKENTSCHER):

Der K-Wert ist ein Maß für die durchschnittliche Molekülgröße hochpolymerer Stoffe. Zur Messung wurden einprozentige (1g/100 ml) toluolische Polymerlösungen herstellt und mit Hilfe eines VOGEL-OSSAG-Viskositmeters deren kinematische Viskositäten bestimmt. Nach Normieeung auf die Viskosität des Toluols wird die relative Viskosität erhalten, aus der sich nach FIKENTSCHER der K-Wert errechnen lässt (Polymer 8/1967, 381 ff.)

Gelpermeationschromatographie GPC

Die Bestimmung des mittleren Molekulargewichtes $M_w$ und der Polydisperistät PD erfolgte durch die Firma Polymer Standards Service in Mainz. Als Eluent wurde THF mit 0,1 Vol.-% Trifluoressigsäure eingesetzt. Die Messung erfolgte bei 25 °C. Als Vorsäule wurde PSS-SDV, 5 $\mu$, $10^3$ Å, ID 8.0 mm x 50 mm verwendet. Zur Auftrennung wurden die Säulen PSS-SDV, 5 $\mu$, $10^3$ sowie $10^5$ und $10^6$ mit jeweils ID 8.0 mm x 300 mm eingesetzt. Die Probenkonzentration betrug 4 g/l, die Durchflußmenge 1.0 ml pro Minute. Es wurde gegen PMMA-Standards gemessen

90°Klebkraft Stahl (offene und abgedeckte Seite)

Die Bestimmung der Klebkraft auf Stahl erfolgt bei einem Prüfklima von 23 °C +/- 1 °C Raumtemperatur und 50 % +/- 5 % rel. Luftfeuchte. Die Muster wurden auf 20 mm Breite zugeschnitten und auf eine Stahlplatte geklebt. Die Stahlplatte muss vor der Messung gereinigt und konditioniert werden. Dazu wird die Platte zunächst mit Aceton abgewischt und danach 5 Minuten an der Luft liegen gelassen, damit das Lösungsmittel abdampfen kann. Die dem Prüfuntergrund abgewandte Seite des Transfertapes wurde dann mit einer 50 $\mu$m Aluminiumfolie abgedeckt was verhindert, dass sich das Muster bei der Messung dehnt. Danach erfolgte das Anrollen des Prüfmusters auf den Stahluntergrund. Hierzu wurde das Tape mit einer 2 kg Rolle 5 mal hin und her, bei einer Aufrollgeschwindigkeit von 10 m/min, überrollt. Unmittelbar nach dem Anrollen wurde die Stahlplatte in eine spezielle Halterung geschoben, die es ermöglicht das Muster in einem Winkel von 90 °C senkrecht nach oben abzuziehen. Die Klebkraftmessung erfolgte mit einer Zwick-Zugprüfmaschine. Beim Applizieren der abgedeckten Seite auf die Stahlplatte wird die offene Seite des Transfertapes zunächst gegen die 50 $\mu$m Aluminiumfolie kaschiert, das Trennmaterial entfernt und auf die Stahlplatte geklebt, analog angerollt und vermessen.
Die Messergebnisse beider Seiten, offen und abgedeckt, sind in N/cm angegeben und sind gemittelt aus drei Messungen.

Scherstandzeit (offene und abgedeckte Seite

Die Musterpräparation erfolgte in einem Prüfklima von 23 °C +/- 1 °C Raumtemperatur und 50 % +/- 5 % rel. Luftfeuchte. Das Prüfmuster wurde auf 13 mm zugeschnitten und auf eine Stahlplatte geklebt. Die Verklebungsfläche beträgt 20 mm x 13 mm (Länge x Breite). Vor der Messung wurde die Stahlplatte gereinigt und konditioniert. Dazu wird die Platte zunächst mit Aceton abgewischt und danach 5 Minuten an der Luft liegen gelassen, damit das Lösungsmittel abdampfen kann. Nach dem Verkleben wurde die offene Seite mit einer 50 $\mu$m Aluminiumfolie verstärkt und mit einer 2 kg Rolle 2 mal hin und her überrollt. Anschließend wurde eine Gurtschlaufe am überstehenden Ende des Transfertapes angebracht. Das Ganze wurde dann an einer geeigneten Vorrichtung aufgehängt und mit 10 N belastet. Die Aufhängvorrichtung ist so beschaffen, dass das Gewicht die Probe in einem Winkel von 179 ° +/- 1 ° belastet. Dadurch ist sichergestellt, dass sich das Transfertape nicht von der Plattenunterkante abschälen kann. Die gemessene Scherstandzeit, die Zeit zwischen Aufhängen und Abfallen des Musters, ist in Minuten angegeben und entspricht dem Mittelwert aus drei Messungen. Zur Messung der abgedeckten Seite wird die offene Seite zunächst mit der 50 $\mu$m Aluminiumfolie verstärkt, das Trennmaterial entfernt und auf die Prüfplatte analog der Beschreibung geklebt. Die Messung wird bei Normalklima (23°C, 55 % rel. Luftfeuchtigkeit) durchgeführt.

Rolling Ball Tack (offene und abgedeckte Seite)

Mittels Rolling Ball Test wurde der Tack der Muster bei sehr kurzer Kontaktzeit gemessen. Die Messung erfolgte in einem Prüfklima von 23 °C +/- 1 °C Raumtemperatur und 50 % +/-5 % rel. Luftfeuchte. Das Transfertape wurde mit der zu prüfenden Seite nach oben unter leichter Spannung auf der exakt waagerecht ausgerichteten Arbeitsplatte fixiert. Anschließend wurde eine 65 mm hohe Rampe auf den Musterstreifen gestellt und eine saubere, mit Aceton gereinigte und 5,6 g schwere Stahlkugel (Durchmesser 11 mm) heruntergerollt. Die Strecke zwischen der Vorderkante der Rampe und dem Kugelmittelpunkt der ausgerollten Kugel wurde gemessen. Angegeben ist der Mittelwert aus 5 Messungen pro Seite.

SAFT - Shear Adhesive Failure Temperatur

Der SAFT-Test ist eine Schnellprüfung der Kurzzeittemperaturbeständigkeit der Transfertapes. Die Muster wurden mit einer 50 $\mu$m Aluminumfolie verstärkt und verbleibene Klebeseite auf eine geschliffene, mit Aceton gereinigte Stahl-Prüfplatte verklebt und anschließend mit einer 2 kg-Stahlrolle und einer Geschwindigkeit von 10 m/min sechsmal überrollt. Die Verklebungsfläche der Probe betrug, Höhe x Breite, 13 mm x 10 mm. Der obere Teil des Musters, der die Prüfplatte um 2 mm überragt, wurde mit einem stabilen Klebestreifen verstärkt. Dort wurde, nachdem die Probe senkrecht aufgehängt wurde, der Wegemessfühler aufgelegt.

Die zu messende Probe wurde am unteren Ende mit einem Gewicht von 50 g belastet. Die Stahl-Prüfplatte mit der verklebten Probe wurde dann, beginnend bei 25 °C, mit einer Rate von 9 °C pro Minute auf die Endtemperatur von 200 °C aufgeheizt. Gemessen wurde der Rutschweg der Probe mittels Wegmessfühler in Abhängigkeit von Temperatur und Zeit. Beendet wurde die Messung bei Erreichen der vorgesehenen Endtemperatur oder bei Erreichen einer Rutschstrecke von > 1000 $\mu$m.

Der SAFT-Test kann zwei Prüfmerkmale liefern: SAFT-Scherweg oder SAFT-Kurzzeittemperaturbeständigkeit. Der SAFT-Scherweg ist die Rutschstrecke in $\mu$m bei Erreichen der Endtemperatur. Die SAFT-Kurzzeittemperaturbeständigkeit ist die Temperatur, bei der eine Rutschstrecke von 1000 $\mu$m erreicht wird. Es wurden beide Seiten des Transfertapes gemessen; die offene und die abgedeckte Seite. Angegeben ist jeweils der Mittelwert einer Doppelbestimmung.

Herstellung der Ausaanaspolymere für die Beispiele T1 bis T7

Im Folgenden wird die Präparation der Ausgangspolymere beschrieben. Die untersuchten Polymere werden konventionell über eine freie radikalische Polymerisation in Lösung hergestellt.

HEMA = Hydroxyethylmethacrylat

AIBN = [2,2'-Azobis(2-methylbutyronitril)]

Perkadox 16 = Bis-(4-t-Butylcyclohexyl)peroxidicarbonat

Basispolymer B1

Ein für radikalische Polymerisationen konventioneller Reaktor wurde mit 27 kg 2-Ethylhexylacrylat, 27 kg n-Butylacrylat, 4,8 kg Methylacrylat, 0,6 kg Acrylsäure, 0,6 kg HEMA und 40 kg Aceton/Isopropanol (93:7) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h wurden erneut 30 g AIBN zugegeben und nach 4 h wurde mit 10 kg Aceton/Isopropanol Gemisch verdünnt.

Nach 5 sowie nach 7 h wurde jeweils mit 90 g Perkadox 16 nachinitiiert. Nach 22 h Reaktionszeit wurde die Polymerisation abgebrochen und auf Raumtemperatur abgekühlt. Das Polyacrylat hat einen K-Wert von 69, einen Feststoffgehalt von 54,6 %, ein mittleres Molekulargewicht von Mw = 810000 g/mol, Polydispersität (Mw/Mn) = 7,6

Basispolymer B2

Analog Beispiel 1 wurden 40,2 kg 2-Ethylhexylacrylat, 18,0 kg tert.-Butylacrylat, 1,2 kg Acrylsäure und 0,6 kg HEMA in 40 kg Aceton/Isopropanol (93:7) polymerisiert. Initiiert wurde zweimal mit jeweils 30 g AIBN, zweimal mit jeweils 90 g Perkadox 16 und verdünnt mit 10 kg Aceton/Isopropanol Gemisch (93:7). Nach 22 h Reaktionszeit wurde die Polymerisation abgebrochen und auf Raumtemperatur abgekühlt.

Das Polyacrylat hat einen K-Wert von 63, einen Feststoffgehalt von 54,8 %, ein mittleres Molekulargewicht von Mw = 653000 g/mol, Polydispersität (Mw/Mn) = 7,8

Basispolymer B3

Analog Beispiel 1 wurden 36,0 kg 2-Ethylhexylacrylat, 21,0 kg tert.-Butylacrylat, 2,4 kg Acrylsäure und 0,6 kg HEMA in 40 kg Aceton/Isopropanol (93:7) polymerisiert. Initiiert wurde zweimal mit jeweils 30 g AIBN, zweimal mit jeweils 90 g Perkadox 16 und verdünnt mit 10 kg Aceton/Isopropanol Gemisch (93:7). Nach 22 h Reaktionszeit wurde die Polymerisation abgebrochen und auf Raumtemperatur abgekühlt.

Das Polyacrylat hat einen K-Wert von 60,0 einen Feststoffgehalt von 53,5 %, ein mittleres Molekulargewicht von Mw = 602000 g/mol, Polydispersität (Mw/Mn) = 7,1

Verfahren 1: Aufkonzentration / Herstellung der Schmelzhaftkleber:

Die mit Hydroxy-Gruppen funktionalisierten Acrylatcopolymere (Basispolymer B1 - B3) werden mittels BERSTORFF-Einschneckenextruder (Aufkonzentrationsextruder) weitestgehend vom Lösemittel befreit. Exemplarisch sind hier die Parameter der Aufkonzentration des Basispolymeren B1 dargestellt. Die Drehzahl der Schnecke betrug 170 U/min, der Motorstrom 17 A, es wurde ein Durchsatz von 62,3 kg flüssig/h realisiert. Zur Aufkonzentration wurde an 3 verschiedenen Domen ein Vakuum angelegt. Die Unterdrücke betrugen jeweils 340 mbar, 50 mbar und 7 mbar, wobei das geringste Vakuum im ersten Dom angelegt wurde. Die Austrittstemperatur des aufkonzentrierten Hotmelts lag bei 105 °C. Der Feststoffgehalt betrug nach diesem Aufkonzentrationsschritt 99,7%.

Verfahren 2: Herstellung Harz-modifizierter Schmelzhaftkleber (Beispiel T7)

Der nach dem oben erläuterten Verfahren 1 hergestellten Acrylatschmelzhaftkleber aus Basispolymer B1 wurden direkt in einen nachgeschalteten WELDING-Doppelschneckenextruder (WELDING Engineers, Orlando, USA; Model 30 MM DWD; Schneckendurchmesser 30mm, Länge Schnecke 1 = 1258 mm; Länge Schnecke 2 = 1081 mm; 3 Zonen) gefördert. Über ein Feststoffdosiersystem wurden 20 Gew.-% des Harzes Dertophene T110 (Hersteller DRT, Frankreich) in Zone 1 zudosiert und homogen eingemischt. Drehzahl betrug 454 U/min, der Motorstrom 42 A, es wurde ein Durchsatz von 29,5 kg/h realisiert. Die Temperaturen der Zonen 1 und 2 betrugen jeweils 100°C, die Schmelzetemperatur in Zone 1 112°C und die Massetemperatur bei Austritt (Zone 3) 90°C.

Verfahren 3: Herstellung der Füllstoff-modifizierten Haftklebemassen, Abmischung mit dem thermischen Vernetzter

Die nach den Verfahren 1 - 2 hergestellten Acrylatschmelzhaftkleber wurden in einem Fütterextruder (Einschneckenförderextruder der Firma TROESTER) aufgeschmolzen und mit diesem als Polymerschmelze in einen Doppelschneckenextruder gefördert (Fa. LEISTRITZ, Deutschland, Bez. LSM 30/34). Das Aggregat wird von außen elektrisch beheizt und über verschiedene Gebläse luftgekühlt. Die Geometrie der Mischschnecken wurde so gewählt, dass bei guter Verteilung des Vernetzungssystems und ggf. der Füllstoffe und in der Polymermatrix gleichzeitig eine kurze Verweilzeit der Klebmasse im Extruder gewährleistet ist. Dazu wurden die Mischwellen des Doppelschneckenextruders so angeordnet, dass sich fördernde und mischende Elemente abwechseln. Die Zugabe der Füllstoffe und des jeweiligen Vernetzungssystems erfolgt mit geeignetem Dosierequipment gegebenenfalls an mehreren Stellen in die druckfreien Förderzonen des Doppelschneckenextruders. Zur Dosierung des Vernetzungssystems werden gegebenenfalls Dosierhilfsmittel eingesetzt. Gegebenenfalls kann am Doppelschneckenextruder eine Vakuumpumpe angeschlossen werden, um die compoundierte Selbstklebemasse von Gaseinschlüssen zu befreien. Die fertig compoundierte Klebmasse wird dann mittels einer dem Mischextruder nachgeschalteten Schmelzepumpe einer Verteilerdüse zugeführt, die die Klebmasse in den ersten Walzenspalt fördert.

Die Beschichtung der erfindungsgemäßen Selbstklebemassen zu einem Transfertape erfolgt bevorzugt den unten beschriebenen Verfahren.

Weitere Verfahren zur Herstellung der erfindungsgemäßen Selbsthaftkleber

Weiterhin ist es möglich, Verfahren 2 und 3 zu kombinieren, so dass man das Harz und die beschriebenen Füllstoffe gemeinsam in die Polymermatrix einarbeitet.

Wie weiter oben erwähnt, wird die Zeit zwischen Zudosierung des Vernetzungssystems bis zum optisch homogenen Ausformen auf einen Träger oder zwischen zwei Trägern als Verarbeitungszeit bezeichnet. Die Verarbeitungszeit ist stark abhängig von Prozesstemperatur, Walzenoberflächentemperaturen, Vernetzertyp und -menge sowie von der Funktionalisierung der Acrylatmasse mit Carboxy- und Hydroxygruppen und gibt den Zeitraum an, in welcher die mit Vernetzer abgemischte Klebmasse mit optisch gutem Strichbild (gelfrei, stippenfrei) beschichtet werden kann.

Verfahren 4: Herstellung der erfinderischen Transferkiebebänder mittels 2-Walzen-auf-tragswerk

Es wird nach einem Verfahren entsprechend der Variante A vorgegangen (vgl. Fig. 2). Nach Austritt der fertig compoundierten, mit Vernetzer abgemischten Klebmasse aus dem Doppelschneckerextruder (Austritt: Runddüse, 5mm Durchmesser) erfolgt die Beschichtung direkt mittels nachgeschaltetem 2-Walzenauftragswerk zwischen zwei silikonisierten Trennfolien (temporärer Träger, beidseitig silikonisiert; und antiadhäsive Hilfsträger, zumindest einseitig silikonisiert,), bevorzugt Polyesterfolien. Dabei wird nach dem Zukaschieren der Folien und vor dem Einrollen die eine der beiden silikonisierten Trennfolien(Hilfsträger) ausgedeckt.

Die Silikonisierung des temporäre Trägers ist vorteilhaft derart gewählt, dass das Klebeband nach einem Aufrollen ohne Trasfer auf die aufliegende Schicht wieder problemlos abrollbar ist. Die Silikonisierung des Hilfsträgers wird bevorzugt derart gewählt, dass sie stärker trennt als die Silikonisierung des temporären Trägers.

Wie oben erwähnt, wird die Zeit zwischen Zudosierung des Vernetzungssystems bis zum optisch homogenen Ausformen auf einen Träger als Verarbeitungszeit bezeichnet. Die Verarbeitungszeit ist stark abhängig von Prozesstemperatur, Vernetzertyp und -menge, sowie von der Funktionalisierung der Acrylatmasse mit Carboxy- und Hydroxygruppen und gibt den Zeitraum an, in welcher die mit Vernetzer abgemischte Klebmasse mit optisch gutem Strichbild (gelfrei, stippenfrei) beschichtet werden kann. Die Beschichtung erfolgt mit einer Bahngeschwindigkeiten von 40 m/min.

In den nachfolgenden Beispielen und in der Tabelle 1 werden die Prozessbedingungen, Dosierverhältnisse und Formulierungen näher erläutert.

**Be**ispiel 1 (T1)

Das Basispolymer 1 wurde gemäß Verfahren 1 aufkonzentiert (Feststoffgehalt 99,7%) und anschließend gemäß Verfahren 1 mit 0,21 Gew.% (bezogen auf Acrylatcopolymer) des hydrophilen, aliphatischen Polyisocyanats Bayhydur VP LS 2150/1 (Fa. BAYER AG, Deutschland) abgemischt. Zur Verbesserung der Dosierfähigkeit wurde der mit dem flüssigen Phophatester REOFOS 65 (Fa. GREAT LAKES, USA) im Verhältnis 1 zu 3 verdünnt. Die Prozessparameter sind in Tabelle 1 zusammengefasst. Die Verarbeitungszeit des Compounds betrug 9 Minuten bei einer effektiven Massetemperatur von 108 °C nach dem Verlassen des LEISTRITZ-Extruders. Die Beschichtung erfolgt am 2-Walzenauftragswerk bei Walzentemperaturen von 100 °C und einem Masseauftrag von 730 g/m$^2$ auf eine beidseitig silikonisierte 50 μm Polyesterfolie gemäß Verfahren 4.

Nach 7 Tagen Raumtemperaturlagerung wurden von dem so hergestellten Klebeband klebtechnische Messungen jeweils der offenen und abgedeckten Seite des Transferklebefilms durchgeführt. Die klebtechnischen Daten des Beispiels T1 sind in Tabelle 2 zusammengefasst.

Beispiel 2 (T2)

Das gemäß Verfahren 1 aufkonzentrierte Basispolymer B1 und gemäß Verfahren 3 mit 6,5 Gew.-% Hohlglaskugeln Q-CEL 5028 (Fa. Pollers Industries) und 2,13 Gew.-% Bayhydur VP LS 2150/1 abgemischte Polyacrylat wurde mittels Verfahren 4 mit einem Masseauftrag von 625 g/m$^2$ auf eine beidseitig silikonisierte 50 μm Polyesterfolie beschichtet.

Nach 7 Tagen Raumtemperaturlagerung wurden von dem so hergestellten Klebeband klebtechnische Messungen jeweils der offenen und abgedeckten Seite des Transferklebefilms durchgeführt. Die klebtechnischen Daten des Beispiels T2 sind in Tabelle 2 zusammengefasst.

Beispiel 3 (T3)

Das gemäß Verfahren 1 aufkonzentrierte Basispolymer B2 wurde gemäß Verfahren 3 mit 6,5 Gew.-% Hohlglaskugeln Q-CEL 5028 und 0,11 Gew.-% Bayhydur VP LS 2150/1 abgemischt und anschließend gemäß Verfahren 4 auf eine beidseitig silikonisierte Polyesterfolie beschichtet. Der Masseauftrag betrug 705 g/m$^2$.

Nach 7 Tagen Raumtemperaturlagerung wurden von dem so hergestellten Klebeband klebtechnische Messungen jeweils der offenen und abgedeckten Seite des Transferklebefilms durchgeführt. Die klebtechnischen Daten des Beispiels T3 sind in Tabelle 2 zusammengefasst.

Bespiel 4 (T4):

Analog Beispiel T1 wurde das aufkonzentrierte Basispolymer B2 mit 0,83 Gew.-% des aliphatischen Polyisocyanat Trimes auf IPDI Basis Tolonate XIDT 70B (Fa. Rhodia) abgemischt und mittels Verfahren 4 mit einem Masseauftrag von 775 g/m$^2$ beschichtet.

Die nach 7 Tagen Raumtemperaturlagerung durchgeführten Messungen jeweils der offenen und abgedeckten Seite des Transferklebefilms T4 sind in Tabelle 2 zusammengefasst.

Beispiel 5 (T5):

Analog Beispiel T3 wurde das aufkonzentrierte Basispolymer B2 mit 6,5 Gew.-% Hohlglaskugeln Q-CEL 5028 und 0,14 Gew.-% Tolonate XIDT 70B abgemischt anschließend auf eine beidseitig silikonisierte 50 μm Polyesterfolie mit einem Masseauftrag von 590 g/m$^2$ beschichtet.

Die nach 7 Tagen Raumtemperaturlagerung durchgeführten Messungen jeweils der offenen und abgedeckten Seite des Transferklebefilms T5 sind in Tabelle 2 zusammengefasst.

Beispiel 6 (T6):

Analog Beispiel T1 wurde das gemäß Verfahren 1 aufkonzentriert Basispolymer B3 mit 0,25 Gew.% (bezogen auf Acrylatcopolymer) des hydrophilen, aliphatischen Polyisocyanats Bayhydur VP LS 2150/1 (Fa. BAYER AG, Deutschland) abgemischt. Anschließend wurde mit einem Masseauftrag von 600 g/m$^2$ auf beidseitig silikonisierte Polyesterfolie gemäß Verfahren 4 beschichtet.

Die nach 7 Tagen Raumtemperaturlagerung ermittelten klebtechnische Daten der offenen und abgedeckten Seite des Transferklebefilm T6 sind in Tabelle 2 zusammengefasst.

Beispiel 7 (T7):

Analog Beispiel 1 wurde das Basispolymer 1 gemäß Verfahren 1 aufkonzentriert und gemäß Verfahren 2 mit 20 Gew.-% Harz DT 110 (Firma DRT) abgemischt, anschließend wurde gemäß Verfahren 3 mit 0,11 Gew.-% Bayhydur VP LS 2150/1 abgemischt und mit einem Masseauftrag von 750 g/m$^2$ auf silikonsierte Polyesterfolien beschichtet.

Die nach 7 Tagen Raumtemperaturlagerung ermittelten klebtechnische Daten der offenen und abgedeckten Seite des Transferklebefilm des Beispiels T7 sind in Tabelle 2 zusammengefasst.

Für den Fachmann völlig überraschend ist die Beschichtbarkeit der Hotmelt-Klebmasse nach Zugabe und Einmischung des Isocyanat-Vernetzungssystems in die Polyacrylat-Klebmasse bei den im Compoundieraggregat herrschenden Temperaturen zwischen 60 °C und 120 °C, vorzugsweise zwischen 70 °C und 100 °C. Unter Beschichtbarkeit wird in diesem Zusammenhang die Eignung zum Ausformen der mit Vernetzer abgemischten Klebmasse in dünne Schichten und zum Aufbringen auf ein bahnförmiges (temporäres) Trägermaterial mittels Beschichtungsdüse oder Walzenbeschichtungswerk verstanden. Zu erwarten war eine Vernetzung bzw. Vergelung der Klebmasse, so dass eine nachfolgende Beschichtung nicht mehr möglich gewesen wäre. Tatsächlich können die beschriebenen Klebmassen aber innerhalb eines gewissen Zeitraumes nach der Vernetzerdosierung und Compoundierung beschichtet werden. Die Verarbeitungszeit ist stark abhängig von Molekulargewicht und Hydroxy-Funktionalisierung der Polyacrylat-Klebmasse, sowie von Typ und Menge des verwendeten Vernetzungssystem und den herrschenden Prozessbedingungen wie z.B. Massetemperatur und geometrische Beschaffenheit des Compoundieraggregates.

Gemäß des bekannten Standes der Technik hätte der Fachmann eine sofortige Reaktion der Isocyanate mit den im Polyacrylat enthaltenen OH-Gruppen mit resultierender Unbeschichtbarkeit der anvernetzten Masse erwartet. Zur Vermeidung hätte er blockierte Isocyanate bei extrem hohen Temperaturen mit dem Nachteil der in der Klebmasse verbleibenden und störenden Blockierungsmittel einsetzen müssen.

Wie den Daten der Tabelle 2 zu entnehmen ist, lassen sich mit diesem Verfahren sehr leistungsstarke Transferklebebänder herstellen. Die Adhäsionswerte sind insbesondere bei Harzmodifizierung sind sehr gut, die Kohäsion - gemessen durch die Scherstandzeit bei 23 °C - ist ebenfalls gut. Für den Fachmann überraschend gut ist die Wärmebeständigkeit gemessen durch den SAFT Test. In jedem Fall ist die Verklebung bis zu einer Temperatur von 200 °C stabil.

Besonders positiv ist das ausgewogene Klebprofil der jeweiligen Seiten des Transferklebebandes. Bei Beschichtung auf einer beidseitig silikonisierten glatten PET-Folie zeigen beide Seiten des Klebebandes des Tranfertapes nahezu gleiche klebtechnische Daten. Dies zeigt die homogene Vernetzung durch die Schicht hindurch. Dies ist für den Fachmann überraschend.

Das erfindungsgemäße Verfahren ermöglicht es erstmals, die Nachteile des Standes der Technik zu vermeiden.

Tabelle 1

| Beispiel | Basispolymer | | Anteil zuschlagstoffe [Gew.%] | Vernetzereinarbeitung und Beschichtung | | | | | | | | | | |
|---|---|---|---|---|---|---|---|---|---|---|---|---|---|---|
| | Polymer | K-Wert | | Vernetzer-Typ und Menge [% Vernetzer auf Polymer] | Masse-durch-satz DSE [kg/h] | Dreh-zahl DSE [1/min] | Soll-tempe ratur DSE [°C] | Strom-auf-nahme DSE [A] | Druck Ausgang DSE [bar] | Masse-temperatur nach DSE [°C] | Beschichtungs-temperatur Rakelwalze / Beschichtungs-walze [°C] | Verar-bei tungs-zeit [min] | Masse-auftrag [g/m²] | Schicht-dicke [µm] |
| T 1 | B2 | 63 | --- | 0,21 % Bayhydur VP LS 2150/1 | 10 | 100 | 80 | 16 | 24 | 108 | 100/100 | 9 | 730 | 770 |
| T 2 | B1 | 69 | 6,5 % Hohlglaskugeln Q-CEL 5028 | 2,13 % Bayhydur VP LS 2150/1 | 11 | 100 | 80 | 11 | 15 | 98 | 100/100 | 4 | 625 | 715 |
| T 3 | B2 | 63 | 6,5 % Hohlglaskugeln Q-CEL 5028 | 0,11 % Bayhydur VP LS 2150/1 | 11 | 150 | 80 | 18 | 38 | 130 | 120 / 120 | 7 | 705 | 720 |
| T 4 | B2 | 63 | --- | 0,83 % Tolonate XIDT 70B | 10 | 100 | 80 | 15 | 32 | 106 | 100/100 | 4 | 775 | 785 |
| T 5 | B2 | 63 | 6,5 % Hohlglaskugeln Q-CEL 5028 | 0,14 % Tolonate XIDT 70B | 11 | 100 | 80 | 18 | 30 | 104 | 100/100 | 5 | 590 | 625 |
| T 6 | B3 | 60 | --- | 0,25 % Bayhydur VP LS 2150/1 | 12 | 100 | 80 | 15 | 32 | 115 | 100 / 100 | 10 | 600 | 620 |
| T 7 | B1 | 69 | 20% DT 110 | 0,25 % Bayhydur VP LS 2150/1 | 10 | 100 | 80 | 14 | 35 | 115 | 100/100 | 14 | 750 | 780 |

Tabelle 2

| Beispiel | Zusammensetzung (Basispolymer, Zuschlagstoffe, Vernetzer) | | | Dicke [μm] | Masse-auftrag [g/m²] | 90° Klebkraft Stahl, [N/cm] | | Scherstandzeit 10 N 23°C [min] | | Rolling Ball Tack [mm] | | SAFT [μm] | |
|---|---|---|---|---|---|---|---|---|---|---|---|---|---|
| | | | | | | offene Seite | abgedeckte Seite | offene Seite | abgedeckte Seite | offene Seite | abgedeckte Seite | offene Seite | abgedeckte Seite |
| T1 | B2 | --- | 0,21% Bayhydur VP LS 2150/1 | 770 | 730 | 14,5 | 14,5 | 24700 | 25000 | 40 | 42 | 687 μm (200°C) | 680 μm (200°C) |
| T2 | B1 | 6,5 % Hohlglaskugeln Q-CEL 5028 | 2,13% Bayhydur VP LS 2150/1 | 715 | 625 | 7,9 | 7,8 | 12050 | 13000 | 230 | 225 | 123 μm (200°C) | 125 μm (200°C) |
| T3 | B2 | 6,5 % Hohlglaskugeln Q-CEL 5028 | 0,11 % Bayhydur VP LS 2150/1 | 720 | 705 | 10,9 | 10,9 | 2154 | 2204 | 14 | 16 | 900 μm (200°C) | 920 μm (200°C) |
| T4 | B2 | --- | 0,83 % Tolonate XIDT 70B | 485 | 475 | 8,8 | 8,7 | 14000 | 13800 | 95 | 96 | 275 μm (200°C) | 280 μm (200°C) |
| T5 | B2 | 6,5 % Hohlglaskugeln Q-CEL 5028 | 0,14 % Tolonate XIDT 70B | 625 | 590 | 9,7 | 9,8 | 7568 | 7457 | 20 | 19 | 785 μm (200°C) | 768 μm (200°C) |
| T6 | B3 | --- | 0,25 % Bayhydur VP LS 2150/1 | 620 | 600 | 8,6 | 8,6 | 15458 | 15649 | 125 | 122 | 235 μm (200°C) | 240 μm (200°C) |
| T7 | B1 | 20 % DT 110 | 0,25 % Bayhydur VP LS 2150/1 | 780 | 750 | 18,0 | 17,9 | 2034 | 2020 | 10 | 9 | 971 μm (200°C) | 978 μm (200°C) |

**Patentansprüche**

1. Beidseitig klebendes Selbstklebeband mit mindestens einer Schicht aus einem photoinitiatorfreien Acrylatschmelzhaftkleber, **dadurch gekennzeichnet, dass** die Acrylatschmelzhaftkleber-Schicht eine homogene Vernetzung, also kein Vernetzungsprofil durch die Schicht hindurch aufweist.

2. Selbstklebeband nach Anspruch 1, **dadurch gekennzeichnet, dass** das dasselbe die Acrylatschmelzhaftkleber-Schicht ist.

3. Selbstklebeband nach zumindest einem der Ansprüche 1 oder 2, **dadurch gekennzeichnet, dass** die Vernetzung eine thermische Vernetzung ist.

4. Selbstklebeband nach zumindest einem der vorangehenden Ansprüche, **gekennzeichnet durch** Vernetzungsstellen aus Urethaneinheiten.

5. Selbstklebeband nach zumindest einem der vorangehenden Ansprüche, **gekennzeichnet durch** einen auf der Acrylatschmelzhaftkleber-Schicht angeordneten temporären Träger, insbesondere ein Trennmaterial.

6. Selbstklebeband nach zumindest einem der vorangehenden Ansprüche, **dadurch gekennzeichnet, dass** die Schichtdicke der Acrylatschmelzhaftkleber-Schicht 50 bis 5000 $\mu$m, insbesondere 100 bis 2000 $\mu$m beträgt.

**Fig. 1**

**Fig. 2**

Fig. 3

Fig. 4

Fig. 5

Europäisches
Patentamt

European
Patent Office

Office européen
des brevets

**EUROPÄISCHER RECHERCHENBERICHT**

Nummer der Anmeldung

EP 09 15 6170

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 1 127 907 A (BEIERSDORF AG [DE] TESA AG [DE]) 29. August 2001 (2001-08-29)<br>* Zusammenfassung *<br>* Absätze [0011], [0017], [0021], [0062]; Anspruch 1; Beispiele * | 1-6 | INV.<br>C09J7/00<br>C08G18/62<br>C08G18/08 |
| | ----- | | |
| X | US 5 648 425 A (EVERAERTS ET AL) 15. Juli 1997 (1997-07-15)<br>* Zusammenfassung *<br>* Spalte 3, Zeilen 34-49 *<br>* Spalte 4, Zeile 59 - Spalte 5, Zeile 6 *<br>* Spalte 7, Zeile 27 - Spalte 8, Zeile 58; Beispiele 40-42 * | 1-6 | |
| | ----- | | |
| X | WO 2004/050784 A (TESA AG; HUSEMANN, MARC; ZOELLNER, STEPHAN) 17. Juni 2004 (2004-06-17)<br>* Zusammenfassung *<br>* Seite 2, Zeile 30 - Seite 4, Zeile 18 *<br>* Seite 12, Zeile 20 - Seite 13, Zeile 11 *<br>* Seite 15, Zeilen 17-27; Ansprüche 1,3,7 * | 1-6 | RECHERCHIERTE SACHGEBIETE (IPC)<br><br>C09J<br>C08G |
| | ----- | | |
| P,X | WO 2005/059052 A (TESA AG; HUSEMANN, MARC; ZOELLNER, STEPHAN) 30. Juni 2005 (2005-06-30)<br>* Zusammenfassung *<br>* Seite 4, Zeile 10 - Seite 5, Zeile 20 *<br>* Seite 7, Zeilen 3-9 *<br>* Seite 15, Zeilen 29,30 *<br>* Seite 18, Zeilen 10-19; Beispiel 3 * | 1-6 | |
| | ----- | | |
| X | EP 1 293 547 A (TESA AG [DE]) 19. März 2003 (2003-03-19)<br>* Zusammenfassung *<br>* Absätze [0026], [0043], [0044]; Beispiele 1,2 * | 1-6 | |
| | ----- | | |

Der vorliegende Recherchenbericht wurde für alle Patentansprüche erstellt

| Recherchenort | Abschlußdatum der Recherche | Prüfer |
|---|---|---|
| München | 24. April 2009 | Meier, Stefan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 15 6170

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-04-2009

| Im Recherchenbericht angeführtes Patentdokument | | Datum der Veröffentlichung | Mitglied(er) der Patentfamilie | | Datum der Veröffentlichung |
|---|---|---|---|---|---|
| EP 1127907 | A | 29-08-2001 | DE | 10008841 A1 | 06-09-2001 |
| | | | ES | 2313915 T3 | 16-03-2009 |
| | | | JP | 2001278920 A | 10-10-2001 |
| | | | US | 2001024764 A1 | 27-09-2001 |
| US 5648425 | A | 15-07-1997 | AU | 665606 B2 | 11-01-1996 |
| | | | AU | 3278493 A | 28-07-1993 |
| | | | AU | 665613 B2 | 11-01-1996 |
| | | | AU | 3418593 A | 28-07-1993 |
| | | | BR | 9206999 A | 05-12-1995 |
| | | | BR | 9207011 A | 05-12-1995 |
| | | | CA | 2126981 A1 | 08-07-1993 |
| | | | CA | 2126982 A1 | 08-07-1993 |
| | | | CN | 1073962 A | 07-07-1993 |
| | | | DE | 69214163 D1 | 31-10-1996 |
| | | | DE | 69214163 T2 | 15-05-1997 |
| | | | DE | 69214164 D1 | 31-10-1996 |
| | | | DE | 69214164 T2 | 06-03-1997 |
| | | | EP | 0619830 A1 | 19-10-1994 |
| | | | EP | 0619831 A1 | 19-10-1994 |
| | | | ES | 2092806 T3 | 01-12-1996 |
| | | | ES | 2092809 T3 | 01-12-1996 |
| | | | JP | 3532565 B2 | 31-05-2004 |
| | | | JP | 7502558 T | 16-03-1995 |
| | | | JP | 3819420 B2 | 06-09-2006 |
| | | | JP | 7502560 T | 16-03-1995 |
| | | | KR | 100270155 B1 | 16-10-2000 |
| | | | MX | 9207574 A1 | 01-06-1993 |
| | | | NO | 942460 A | 23-08-1994 |
| | | | NO | 942461 A | 30-08-1994 |
| | | | WO | 9313147 A1 | 08-07-1993 |
| | | | WO | 9313148 A1 | 08-07-1993 |
| WO 2004050784 | A | 17-06-2004 | AU | 2003283381 A1 | 23-06-2004 |
| | | | CN | 1720308 A | 11-01-2006 |
| | | | DE | 10256511 A1 | 24-06-2004 |
| | | | EP | 1570018 A1 | 07-09-2005 |
| | | | ES | 2311741 T3 | 16-02-2009 |
| | | | JP | 2006509063 T | 16-03-2006 |
| | | | US | 2006057366 A1 | 16-03-2006 |
| WO 2005059052 | A | 30-06-2005 | DE | 10359349 A1 | 14-07-2005 |
| | | | EP | 1697479 A1 | 06-09-2006 |
| | | | US | 2005129936 A1 | 16-06-2005 |
| EP 1293547 | A | 19-03-2003 | DE | 10145229 A1 | 12-08-2004 |

Für nähere Einzelheiten zu diesem Anhang : siehe Amtsblatt des Europäischen Patentamts, Nr.12/82

**ANHANG ZUM EUROPÄISCHEN RECHERCHENBERICHT
ÜBER DIE EUROPÄISCHE PATENTANMELDUNG NR.**

EP 09 15 6170

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-04-2009

| Im Recherchenbericht angeführtes Patentdokument | Datum der Veröffentlichung | Mitglied(er) der Patentfamilie | Datum der Veröffentlichung |
|---|---|---|---|
| EP 1293547 A | | ES 2280461 T3 | 16-09-2007 |
| | | JP 2003147310 A | 21-05-2003 |
| | | US 2003082370 A1 | 01-05-2003 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4303183 A1
- DE 19846902 A1
- DE 10163545 A1
- DE 10221402
- US 6765078 B2
- DE 10036901 A1
- US 20040092685 A1
- EP 0824111 A1
- EP 826698 A1
- EP 824110 A1
- EP 841346 A1
- EP 850957 A1
- US 5945491 A
- US 5854364 A
- US 5789487 A
- EP 1361260 A1

**In der Beschreibung aufgeführte Nicht-Patentliteratur**

- **T.G. Fox.** *Bull. Am. Phys. Soc.,* 1956, vol. 1, 123